# EUROPÄISCHE PATENTSCHRIFT

(11) **EP 3 648 417 B1**
(45) Veröffentlichungstag und Bekanntmachung des Hinweises auf die Patenterteilung: **21.07.2021**
(21) Anmeldenummer: 19191790.5
(22) Anmeldetag: 14.08.2019
(51) Int. Cl.: H04L 12/66, F41H 11/02, H04L 12/715, F41G 9/00, F41G 3/02, F41G 3/04, F41G 3/06, F41G 3/00, H04W 28/02, H04W 84/18

(54) **KOMMUNIKATIONSSYSTEM FÜR EIN TAKTISCHES LUFTVERTEIDIGUNGSSYSTEM**
COMMUNICATION SYSTEM FOR A TACTICAL AIR DEFENCE SYSTEM
SYSTÈME DE COMMUNICATION POUR UN SYSTÈME TACTIQUE DE DÉFENSE AÉRIENNE

(30) Priorität: 30.10.2018 DE 102018008521
(43) Veröffentlichungstag der Anmeldung: 06.05.2020
(73) Patentinhaber: MBDA Deutschland GmbH, 86529 Schrobenhausen (DE)
(72) Erfinder: Held, Moritz, 80637 München (DE); Grabmeier, Michael, 83022 Rosenheim (DE); Stuehler, Peter, 84036 Kumhausen (DE); Opitz, Stefan, 85435 Erding (DE)
(74) Vertreter: Isarpatent

(56) Entgegenhaltungen:
- EP-A1- 2 955 475
- Mike Chandler: "Army Integrated Air and Missile Defense Program Update", , 17. November 2017 (2017-11-17), Seiten 1-20, XP055664483, Gefunden im Internet: URL:http://hamaweb.org/presentations/2017/ november2017mikechandler.pdf [gefunden am 2020-02-03] & Michael R Chandler: "AIAMD Overview to Space and Missile Defense Working Group", , 23. Juli 2015 (2015-07-23), Seiten 1-15, XP055664523, Gefunden im Internet: URL:https://ndiatvc.org/images/downloads/S MDWG_23_July_2015/pao_approved_iamd_smdwg_ brief_8_jul_2015.pdf [gefunden am 2020-02-03]
- THOMAS F IVERSEN: "Mobile and Netted Air Defence Systems", RTO SCI SYMPOSIUM ON ''SYSTEM CONCEPTS FOR INTEGRATED AIR DEFENSE OF MULTINATIONAL MOBILE CRISIS REACTION FORCES, 22. Mai 2000 (2000-05-22), Seiten 17-1, XP055505124, Valecia, Spain
- Le Bourget: "MBDA presents NCES: a multilayer, network-centric, scalable architecture for ground based air defence", , 20. Juni 2017 (2017-06-20), Seiten 1-2, XP055664310, Gefunden im Internet: URL:https://www.mbda-systems.com/press-rel eases/mbda-presents-nces-multilayer-networ k-centric-scalable-architecture-ground-bas ed-air-defence/ [gefunden am 2020-02-03]
- Sydney J. Freedberg: "Army Awards Northrop $289M For IBCS Missile Defense Network", , 1. Oktober 2018 (2018-10-01), Seiten 1-3, XP055664713, Gefunden im Internet: URL:https://breakingdefense.com/2018/10/ar my-gives-northrop-289m-for-ibcs-missile-de fense-network/ [gefunden am 2020-02-04]

## Beschreibung

### TECHNISCHES GEBIET DER ERFINDUNG

Die Erfindung betrifft ein Kommunikationssystem für ein taktisches Luftverteidigungssystem, LVS, sowie Kommunikationsverfahren zum Datenaustausch zwischen Komponenten eines taktischen Luftverteidigungssystems.

### TECHNISCHER HINTERGRUND

Luftverteidigungssysteme, LVS, bieten einen Nah- und Nächstbereichsschutz gegen Bedrohungen aus der Luft. LVS gewährleisten stationären Schutz als auch hochmobilen Begleitschutz sowie unmittelbare Feuerbereitschaft als eines von mehreren Elementen der integrierten Luftverteidigung. LVS verwenden häufig eine einheitliche Systemarchitektur zur Anbindung von Sensoren und Effektoren, die auch eine sichere Aufklärung und Bekämpfung aktueller Bedrohungen durch taktische ballistische Flugkörper (TBM) und luftatmende Ziele (ABT) sowie durch Klein- und Kleinstziele gewährleistet.

Ein Baustein einer leistungsfähigen Systemarchitektur eines LVS sind mobile optische Weitbereichsaufklärungs- und -beobachtungssysteme (MOWABS; englisch auch "long-range reconnaissance and observation systems", LORROS), welche optische Sensoren wie etwa CCD-Bildsensoren als Tagsichtgeräte und vorwärts gerichtete multispektrale Infrarot- bzw. Wärmebildkameras ("Forward Looking Infrared", FLIR) als Nachtsichtgeräte einsetzen, um eine Detektion, Klassifikation und Identifikation von potentiellen Zielobjekten des LVS zu ermöglichen.

Ein weiterer Baustein einer derartigen Systemarchitektur sind Effektorsysteme zum Bekämpfen von luftgebundenen Zielobjekten, welche beispielsweise eine Effektoreinheit wie etwa eine Luftabwehrrakete mit zugehörigen Startgeräten zum Starten der Effektorsysteme und/oder Beladeeinheiten zum Beladen eines Kanisters eines Startgerätes mit ein oder mehreren Effektoreinheiten aufweisen kann. Darüber hinaus können auch Radarsysteme für Überwachung und Zielverfolgung sowie Unterstützungseinheiten wie Erkundungssysteme, Nachladefahrzeuge oder Logistikfahrzeuge in die Systemarchitektur eingebunden werden.

Schließlich übernimmt ein Führungs- oder Einsatzgefechtsstand die taktische Steuerung des Effektorsystems, des MOWABS und gegebenenfalls weiterer Sensorsysteme. Ein MOWABS oder auch andere Sensorsysteme werden durch den Führungs- oder Einsatzgefechtsstand auf ein dem System bekanntes Flugobjekt eingewiesen und liefern Online-Bild- und/oder Online-Videodaten und/oder Radar-Zielplots und/oder Radar-HRR-Messungen (high range resolution) und/oder Radar-JEM-Messungen (jet engine modulation) etc. des verfolgten Flugobjektes in Echtzeit oder echtzeitnah an den Führungs- oder Einsatzgefechtsstand. Gemäß vorgegebenen Kriterien zur Zielerfassung, Zielklassifikation, Zielidentifikation, Risikobewertung und den Einsatzregeln (Rules of Engagement) kann auf der Basis der durch das MOWABS oder weiterer Sensorsysteme erfassten optischen Daten eine manuelle Freigabe einer Zielbekämpfung im halbautomatischen oder manuellen Gefechtsmodus bzw. eine manuelle Blockierung im vollautomatischen Gefechtsmodus erfolgen.

Die Druckschrift EP 2 955 475 B1 offenbart ein bodengebundenes Luftabwehrsystem mit derartigen Komponenten, welche über ein zentrales Integrationsmodul in kommunikativer Datenverbindung stehen. Die Druckschrift DE 10 2007 007 404 A1 offenbart ein Verfahren und eine Vorrichtung zur Fernauslösung mindestens eines aus einer Waffe abgefeuerten Geschosses. Die Druckschrift US 4,641,801 A offenbart ein System zum Datenaustausch zwischen einzelnen Komponenten eines Luftabwehrsystems über einen Feuerleitrechner.

Die Druckschrift "Mobile and Netted Air Defence Systems" von Thomas F Iversen, RTO SCI SYMPOSIUM ON "SYSTEM CONCEPTS FOR INTEGRATED AIR DEFENSE OF MULTINATIONAL MOBILE CRISIS REACTION FORCES, 22. Mai 2000, Seiten 17-1, XP055505124, zeigt Konnektivitätsoptionen von verschiedenen Komponenten eines Luftverteidigungssystems.

Die Präsentationen "Army Integrated Air and Missile Defense Program Update" von M. Chandler, 2017-11-17, XP055664483 und "AIAMD Overview to Space and Missile Defense Working Group" von M. Chandler, 2015-07-23, XP055664523, erläutern Details von taktischen Luftabwehrsystemen.

Es besteht jedoch ein Bedarf an verbesserten Kommunikationssystemen im Rahmen der taktischen Luftabwehr, mit denen der Pflege- und Änderungsaufwand bei der Integration unterschiedlicher Komponenten verschiedener Hersteller erleichtert wird und die Systemhoheit für den Betreiber dauerhaft erhalten bleibt.

### ZUSAMMENFASSUNG DER ERFINDUNG

Die Erfindung ist durch die unabhängigen Ansprüche definiert. Die abhängigen Ansprüche beschreiben weitere Ausführungsformen der Erfindung.

Eine der Aufgaben der Erfindung besteht darin, Lösungen für eine Kommunikation zwischen Komponenten eines taktischen Luftverteidigungssystems, LVS, zu finden, welche mit dem Betrieb von Komponenten unterschiedlicher Komponentenhersteller kompatibel sind und welche die Systemhoheit des LVS-Nutzers herstellen und dauerhaft erhalten.

Diese und andere Aufgaben werden durch ein Kommunikationssystem mit den Merkmalen des Anspruchs 1, ein taktisches Luftverteidigungssystem (LVS) mit den Merkmalen des Anspruchs 8 sowie ein Verfahren zur Kommunikation zwischen Systemkomponenten eines taktischen Luftverteidigungssystems (LVS) mit den Merkmalen des Anspruchs 10 gelöst.

Gemäß einem ersten Aspekt der Erfindung umfasst ein Kommunikationssystem, insbesondere für den Einsatz in einer Systemarchitektur eines taktischen LVS als Element der integrierten Luftverteidigung, eine Kommunikationsbasisstation, welche über eine kabelgebundene Datennetzverbindung an einen Gefechtsstand des taktischen Luftverteidigungssystems ankoppelbar ist, ein oder mehrere Edge-Gateways, welche mit der Kommunikationsbasisstation in bidirektionaler kommunikativer Funkverbindung stehen und welche dazu ausgelegt sind, mit der Kommunikationsbasisstation gemäß einem gemeinsamen Kommunikationsprotokoll Daten auszutauschen, und ein oder mehrere Peripherieadapter, welche über kabelgebundene Datennetzverbindungen an jeweils eines der ein oder mehreren Edge-Gateways ankoppelbar sind und welche zur datentechnischen Anbindung einer Systemkomponente oder eines Peripherieelements an das taktische Luftverteidigungssystem ausgebildet sind.

Gemäß einem zweiten Aspekt der Erfindung umfasst ein taktisches Luftverteidigungssystem mindestens einen Gefechtsstand, ein Kommunikationssystem gemäß dem ersten Aspekt der Erfindung, dessen Kommunikationsbasisstation mit dem mindestens einen Gefechtsstand in kabelgebundener Kommunikationsverbindung steht, und ein oder mehrere Luftverteidigungssystemkomponenten, welche mit jeweils einem der ein oder mehreren Peripherieadapter in kommunikativer Wirkverbindung stehen und welche dazu ausgelegt sind, über die ein oder mehreren Peripherieadapter, die ein oder mehreren Edge-Gateways und die Kommunikationsbasisstation Daten mit dem mindestens einen Gefechtsstand auszutauschen.

Gemäß einem dritten Aspekt der Erfindung umfasst ein Verfahren zur Kommunikation zwischen Systemkomponenten eines Luftverteidigungssystems, insbesondere zur Unterstützung der Detektion, Klassifikation und Identifikation von Zielobjekten in einem Führungs- oder Einsatzgefechtsstand eines taktischen Luftverteidigungssystems als Element der integrierten Luftverteidigung, die Schritte des Ankoppelns einer Kommunikationsbasisstation über eine kabelgebundene Datennetzverbindung an einen Gefechtsstand des taktischen Luftverteidigungssystems, des Herstellens einer bidirektionalen kommunikativen Funkverbindung zwischen ein oder mehreren Edge-Gateways und der Kommunikationsbasisstation, welche einen funkgebundenen Datenaustausch gemäß einem gemeinsamen Kommunikationsprotokoll ermöglicht, des Ankoppelns eines oder mehrerer Peripherieadapter über kabelgebundene Datennetzverbindungen an jeweils eines der ein oder mehreren Edge-Gateways, und des Vermittelns einer bidirektionalen Datenkommunikation zwischen mit den ein oder mehreren Peripherieadaptern verbundenen Peripherieelementen des taktischen Luftverteidigungssystems mit dem Gefechtsstand über die ein oder mehreren Edge-Gateways und die Kommunikationsbasisstation.

Eine wesentliche Idee der Erfindung besteht darin, bei einem taktischen LVS zwischen einer Kernstruktur und optionaler Peripherie zu unterscheiden und für die Kernstruktur den Führungs- oder Einsatzgefechtsstand mit einem leistungsfähigen zentral verwalteten Funkkommunikationssystem zu kombinieren. Dadurch kann ein Nutzer des LVS die Architektur und Funktionalität der LVS-Kernstruktur unter Kontrolle behalten und anpassbar zu rekonfigurieren.

Ein besonderer Vorteil in den erfindungsgemäßen Lösungen besteht darin, dass auf der Kommunikationsebene innerhalb der Kernstruktur eine zentralistische, deterministische Kanalzugriffsmethode implementiert werden kann, in der eine feste Basisstation eine effiziente Priorisierung von Datenübertragungen vornehmen kann, bei der über Dienstgüten ("quality of service", QoS) minimale Bandbreiten, maximale Latenzzeiten und maximale Paketverlustraten garantiert werden können. Diese effiziente Priorisierung schafft eine hinreichende Resilienz des Kommunikationssystems gegenüber potentiellen Sättigungen der Sensorsysteme und unakzeptablen Verzögerungen beim Versand und Erhalt zeit- und inhaltskritischer Informationen innerhalb des LVS.

Der Führungs- oder Einsatzgefechtsstand kann vorteilhafterweise mit einer Datenratenregelung ausgestattet werden, die zu transferierende Datenvolumina dynamisch an die jeweils verfügbaren Datentransferkapazitäten je angeschlossener Komponente anpassen kann. Dabei bleibt die für die Datentransfers erforderliche Kommunikationssystemhardware für den Nutzer des LVS transparent und garantiert volle Kontrolle über Informationen bezüglich aktueller Datenlinkzustände wie etwa Kanalqualität, Signal-zu-Rausch-Verhältnisse, Modulations- und Coding-Schemata und dergleichen.

Durch die Erfindung kann die mechanische und elektrische Integration eines Funkkommunikationssystems mit Antennenmast, elektrischem bzw. hydraulischem Antrieb, Antennen, Funkgerät sowie Kryptiergeräten in ein Peripherie-Element vermieden werden, wodurch die Anbindung weiterer Sensoren oder anderer Effektoren erheblich erleichtert wird. Dies ermöglicht in vorteilhafter Weise die Vereinheitlichung der Kommunikation. Darüber hinaus können Nachrichten in der Kernstruktur priorisiert werden und die Steuerung der Nachrichtenpriorisierung bleibt im Zentrum des LVS gekapselt. Dies vereinfacht die Integration von Peripherie-Elementen unterschiedlicher Hersteller. Die Steuerung des Datenvolumens verbleibt unter der Kontrolle des Betreibers der Kernstruktur.

Weiterhin ist es - anders als im Stand der Technik - nicht mehr notwendig, zentrale Integrationsmodule einzusetzen, bei der die Anpassbarkeit an große LVS mit einer Vielzahl von Peripherie-Elementen erschwert ist.

Vorteilhafte Ausgestaltungen und Weiterbildungen ergeben sich aus den weiteren Unteransprüchen sowie aus der Beschreibung unter Bezugnahme auf die Figuren.

Gemäß einigen Ausführungsformen des Kommunikationssystems können die ein oder mehreren Peripherieadapter mobile Geräte sein, die in kommunikativer Datenverbindung mit jeweils einem Peripherieelement stehen. Alternativ dazu können gemäß einigen weiteren Ausführungsformen des erfindungsgemäßen Kommunikationssystems die ein oder mehreren Peripherieadapter in jeweils ein Peripherieelement fest integriert sein.

Gemäß einigen Ausführungsformen des Kommunikationssystems können die kabelgebundenen Datennetzverbindungen zwischen den ein oder mehreren Peripherieadaptern und den ein oder mehrere Edge-Gateways abhörsicher sein.

Gemäß einigen Ausführungsformen des Kommunikationssystems kann die Kommunikationsbasisstation weiterhin dazu ausgebildet sein, ein Gefechtsstandsfunknetz zwischen mehreren Gefechtsständen des taktischen Luftverteidigungssystems aufrechtzuerhalten.

Gemäß einigen Ausführungsformen des Kommunikationssystems können die ein oder mehreren Peripherieadapter jeweils eine Kernschnittstelle und eine Peripherieschnittstelle aufweisen, welche dazu ausgelegt sind, Daten, welche zwischen einem Edge-Gateway und einem Peripherieelement ausgetauscht werden, bezüglich eines Datenformates und eines Kommunikationsprotokolles zu konvertieren. Dabei kann gemäß einigen Ausführungsformen des Kommunikationssystems die Kernschnittstelle einen instantiierten Kernschnittstellentreiber aufweisen, welcher durch ein instantiiertes Interaktionsregelwerk des Peripherieadapters gesteuert wird. Weiterhin kann die Peripherieschnittstelle hierbei gemäß einigen Ausführungsformen des Kommunikationssystems einen Peripherieelementtreiber und einen mit dem Peripherieelementtreiber gekoppelten Datenkonverter aufweisen.

Gemäß einigen Ausführungsformen des Kommunikationssystems kann die Kommunikationsbasisstation eine zentralistische, deterministische Kanalzugriffsmethode oder eine dezentrale, stochastische Kanalzugriffsmethode zum Aufbau der bidirektionalen kommunikativen Funkverbindung mit den ein oder mehreren Edge-Gateways implementieren.

Gemäß einigen Ausführungsformen des Kommunikationssystems kann die Kommunikationsbasisstation weiterhin dazu ausgelegt sein, eine Transportpriorisierung der zwischen den ein oder mehreren Edge-Gateways und der Kommunikationsbasisstation vorzunehmen.

Gemäß einigen Ausführungsformen des erfindungsgemäßen Verfahrens kann der Schritt des Herstellens der bidirektionalen kommunikativen Funkverbindung ein Implementieren einer zentralistischen, deterministischen Kanalzugriffsmethode zum Aufbau der bidirektionalen kommunikativen Funkverbindung zwischen der Kommunikationsbasisstation und den ein oder mehreren Edge-Gateways umfasst.

Gemäß einigen weiteren Ausführungsformen des erfindungsgemäßen Verfahrens können die ein oder mehreren Peripherieadapter mobile Geräte sein, die in kommunikativer Datenverbindung mit jeweils einer Systemkomponente stehen. Alternativ dazu können gemäß einigen weiteren Ausführungsformen des erfindungsgemäßen Verfahrens die ein oder mehreren Peripherieadapter in jeweils eine Systemkomponente fest integriert sein.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 ein schematisches Blockschaubild der Netzwerkumgebung in einem taktischen Luftverteidigungssystem gemäß einer Ausführungsform der Erfindung;
Fig. 2 ein schematisches Blockschaubild der Systemarchitektur eines Kommunikationssystems in einem taktischen Luftverteidigungssystem gemäß einer weiteren Ausführungsform der Erfindung;
Fig. 3 eine beispielhafte Illustration eines Netzwerkknotens gemäß einer weiteren Ausführungsform der Erfindung, welcher in einer Netzwerkumgebung eines taktischen Luftverteidigungssystems eingesetzt werden kann;
Fig. 4 ein schematisches Blockschaubild einer Netzwerkschnittstelle eines Netzwerkknotens gemäß einer weiteren Ausführungsform der Erfindung;
Fig. 5 ein schematisches Blockschaubild einer Netzwerkschnittstelle eines Netzwerkknotens gemäß einer weiteren Ausführungsform der Erfindung;
Fig. 6 ein schematisches Blockschaubild eines Edge-Gateways für eine Netzwerkumgebung eines taktischen Luftverteidigungssystems gemäß einer weiteren Ausführungsform der Erfindung;
Fig. 7 ein schematisches Blockschaubild einer Kommunikationsbasisstation für eine Netzwerkumgebung eines taktischen Luftverteidigungssystems gemäß einer Ausführungsform der Erfindung;
Fig. 8 ein schematisches Blockschaubild eines Peripherieadapters zur Anbindung einer Systemkomponente an eine Netzwerkumgebung eines taktischen Luftverteidigungssystems gemäß einer weiteren Ausführungsform der Erfindung; und
Fig. 9 ein Flussdiagramm eines Kommunikationsverfahren zum Datenaustausch zwischen Komponenten eines taktischen Luftverteidigungssystems gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

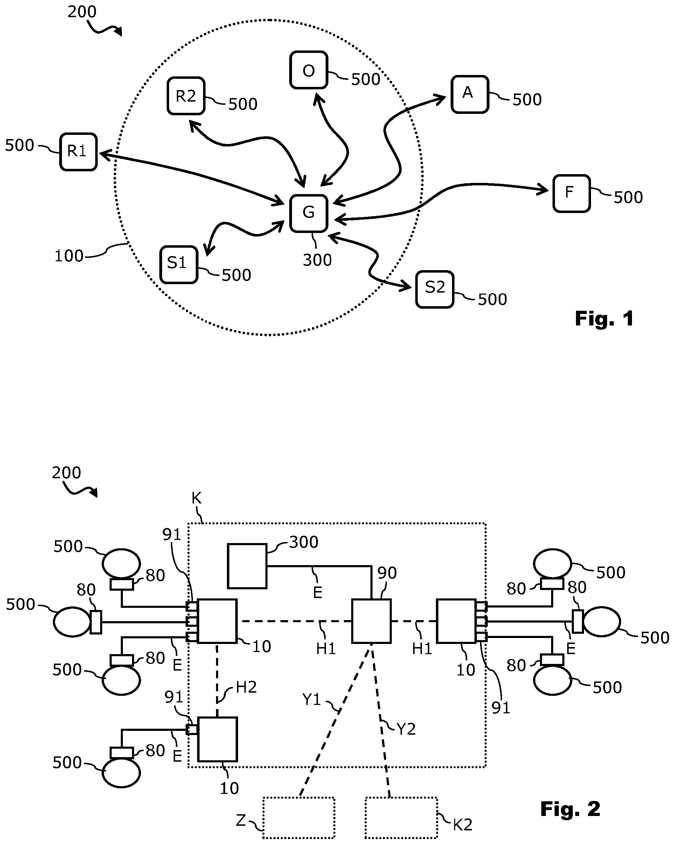

Fig. 1 zeigt eine beispielhafte Illustration einer Netzwerkumgebung 100 in einem taktischen Luftverteidigungssystem 200. Die Netzwerkumgebung 100 der Fig. 1 ist in Sterntopologie aufgebaut. Beispielsweise kann das zentrale Element 300 als Basisnetzwerkknoten üblicherweise die Funktion des Gefechtsstandes G ausführen und temporär die Funktionen einer Basisstation für die Kommunikation mit einer Vielzahl von Netzwerkknoten 500 übernehmen. Der Gefechtsstand G kann dabei insbesondere ein Führungsgefechtsstand oder ein Einsatzgefechtsstand sein.

Wenn nun die Kommunikation zum Gefechtsstand G gestört ist, ausfällt oder anderweitig unverlässlich geworden ist, kann die Sterntopologie dynamisch angepasst werden. Dabei kann ein (in Fig. 1 nicht explizit illustrierter) redundanter Ersatzgefechtsstand vorgehalten werden, der dann die Gefechtsstandfunktion übernehmen kann. Die übrigen Netzwerkknoten 500 können dann dynamisch rekonfiguriert werden und nunmehr in Sterntopologie mit dem redundanten Ersatzgefechtsstand als funktionalem Sternzentrum kommunizieren.

Die in Fig. 1 dargestellten Komponenten der Netzwerkumgebung 100 sind nur beispielhafter Natur und weitere Komponenten können im Zusammenhang mit der Netzwerkumgebung 100 implementiert werden. Beispielsweise kann es möglich sein, dass mehr oder weniger als die sieben in Fig. 1 dargestellten Netzwerkknoten 500 in der Netzwerkumgebung 100 vorhanden sind. Außerdem sollte klar sein, dass die gezeigten Netzwerkverbindungen zwischen einzelnen Netzwerkknoten 500 oder den Netzwerkknoten 500 und dem zentralen Element 300 in Fig. 1 nur beispielhaft dargestellt sind, und dass zwischen Netzwerkknoten 500 untereinander oder Netzwerkknoten 500 und dem zentralen Element 300, zwischen denen in Fig. 1 eine Netzwerkverbindung dargestellt ist, nicht unbedingt oder nicht dauerhaft eine Netzwerkverbindung bestehen muss, und dass zwischen Netzwerkknoten 500 untereinander oder Netzwerkknoten 500 und dem zentralen Element 300, zwischen denen in Fig. 1 keine Netzwerkverbindung dargestellt ist, temporär oder dauerhaft eine Netzwerkverbindung etabliert werden kann.

Die Netzwerkknoten 500 sind jeweils mit netzwerkfähigen Bauelementen bzw. Netzwerkschnittstellen ausgestattet, so dass es jedem Netzwerkknoten 500 ermöglicht wird, selbsttätig mit anderen Netzwerkknoten 500 Kontakt über ein gemeinsam genutztes Kommunikationsmedium aufzunehmen und über geeignete Kommunikationsprotokolle eine Netzwerkverbindung aufzubauen. Beispielsweise kann das Kommunikationsmedium der freie Raum bzw. die Atmosphäre sein, über die eine drahtlose Netzwerkverbindung aufgebaut werden kann, wie beispielsweise WLAN gemäß IEEE 802.11 oder andere kabellose Übertragungsverfahren im Radiofrequenzbereich und IrDA oder optischer Richtfunk im infraroten bzw. optischen Frequenzbereich. Die dabei etablierten Netzwerkverbindungen können unidirektional oder bidirektional sein. Weiterhin kann die durch die Netzwerkverbindungen entstehende Netzwerkumgebung vermascht sein, beispielsweise durch die Ausbildung redundanter Funkstrecken zur Erhöhung der Netzkapazität, der Netzsicherheit und/oder der Resilienz gegenüber externen Störungen.

In vorteilhaften Varianten kann die Netzwerkumgebung keine vermaschte Struktur aufweisen, um das durch potentiell vielstufiges Hopping verursachte zusätzliche Datenvolumen zu minimieren. In manchen Varianten kann ein einstufiges oder zweistufiges Hopping ("dual-hop relay") zugelassen werden, beispielsweise für Datenverbindungen zwischen Einsatzgefechtsständen und Effektoren bzw. Unterstützungseinheiten, um etwa ein Sensorsystem möglichst nahe an die erwartete Zielposition heranbringen bzw. das Sensorsystem möglichst weit entfernt vom Einsatzgefechtsstand aufstellen zu können. Dadurch kann die Reichweite des Sensorsystems bzw. dessen Sensoren in vorteilhafter Weise erhöht werden.

Ebenso kann durch ein- bzw. maximal zweistufiges Hopping der Ausfall eines Kommunikationslinks vom Einsatzgefechtsstand zu einem der Peripherie-Elemente wie etwa einem Effektor oder einer Unterstützungseinheit kompensiert werden, wenn der entsprechende Netzwerkknoten 500 zwar keine intakte oder verlässliche direkte Funkverbindung zum zentralen Element 300 aufweist, aber eine Funkverbindung zu einem benachbarten Netzwerkknoten 500 aufbauen kann, dessen direkte Funkverbindung zum zentralen Element 300 intakt und verlässlich ist. Für manche Netzwerkknoten 500 wie etwa Radarsensoren kann ein Hopping aufgrund der potentiell hohen Datenvolumina prinzipiell unterbunden werden, um die hohen Datenraten nur auf dem Wege einer direkten Funkverbindung zum zentralen Element 300 übertragen zu müssen.

Die Netzwerkknoten 500 können unterschiedliche Teilnehmer eines Kommunikationsnetzes zur taktischen Luftverteidigung sein, wie beispielsweise Radarstationen R1, R2 zur Zielverfolgung oder Zielüberwachung, Startgeräte S1, S2, Sensoren O wie etwa optronische Sensoren, Flugzeuge A oder Flugkörper F wie etwa Drohnen, Raketen oder dergleichen. Weiterhin kann als zentrales Element 300 einer Netzwerkumgebung 100 ein mobiler, quasi-stationärer oder stationärer Gefechtsstand G vorgesehen sein. Die Netzwerkknoten 500 können untereinander und mit dem zentralen Element 300 verschiedene Arten von Daten austauschen, beispielsweise taktische Daten, Voice-over-IP-Datenverkehr, Videodaten, Statusberichte, Kommandos, GPS-Daten und dergleichen. Die Datenkommunikation kann bevorzugt paketbasiert erfolgen, beispielsweise in einem Zeitmultiplexübertragungsverfahren (TDMA). Derartige Kommunikationsnetze können beispielsweise von der verbesserten Resilienz gegenüber Störungen und den erhöhten Datenraten der Netzwerkumgebung 100 profitieren.

Fig. 2 zeigt ein schematisches Blockschaubild der Systemarchitektur eines Kommunikationssystems in einem taktischen Luftverteidigungssystem, wie etwa dem taktischen Luftverteidigungssystem 200 der Fig. 1. Die Systemarchitektur weist ein Kernnetz K auf, welches einen Gefechtsstand 300, eine Kommunikationsbasisstation 90 und ein oder mehrere Edge-Gateways 10 aufweist. Die Edge-Gateways 10 stellen jeweils adressierbare Netzwerkknoten des Kernnetzes KI dar, mit Hilfe derer Dienste und Informationen benachbarter Peripherienetzwerke in Dienste des Kernnetzes K umgesetzt werden können. Die Edge-Gateways 10 implementieren alle notwendigen Funktionen, um eine vollständige Umwandlung der aus den Peripherienetzwerken erhaltenen Daten und Informationen vornehmen zu können. Dazu können die Edge-Gateways 10 Formate und Adressen von einem und in ein Kernnetzwerkprotokoll des Kernnetzes K umsetzen, Codierungen konvertieren, Datenpakete zwischenspeichern und nach Prioritätsvorgaben zeitversetzt verschicken und empfangen, empfangene Datenpakete bestätigen, Bestätigungen über den Empfang versandter Datenpakete verarbeiten und den Datenfluss hinsichtlich Datenraten, Übertragungsgeschwindigkeiten und/oder Empfangsberechtigungen kontrollieren.

Die Edge-Gateways 10 kommunizieren mit der Kommunikationsbasisstation 90 als zentralem Netzwerkelement des Kernnetzes K. Die Kommunikationsbasisstation 90 ist dem Gefechtsstand 300 zugeordnet und mit selbigem über eine kabelgebundene Datennetzverbindung E verbunden, wie beispielsweise eine drahtgebundene Ethernet-Verbindung. Über die Kommunikationsbasisstation 90 und eines der jeweiligen Edge-Gateways 10 kann der Gefechtsstand 300 als Master jeweils eines von vielen Peripherie-Elementen (dargestellt als Netzwerkknoten 500 in Peripherie-Netzwerken) kontrollieren und steuern. In vorteilhaften Varianten findet zwischen den Peripherie-Elementen untereinander keinerlei direkte funktionale Kommunikation statt. In manchen Varianten können spezifische Kommunikationsverbindung zweckgebunden etabliert werden, wie etwa bei einem Doppeltracking von Zielverfolgungsradaren. Eine Kommunikation der Peripherie-Elemente untereinander kann allerdings über eines der Edge-Gateways 10, die Kommunikationsbasisstation 90 und den Gefechtsstand 300 erfolgen, der die jeweiligen Nachrichten an ein anderes Peripherie-Element übermittelt.

Die in Fig. 1 und 2 dargestellten Netzwerkumgebungen können zum Aufbau von Kernzellen eines Kommunikationssystems dienen, welche jeweils eine Kommunikationsbasisstation 90, ein oder mehrere Edge-Gateways 10, welche mit der Kommunikationsbasisstation 90 in bidirektionaler kommunikativer Funkverbindung stehen, sowie ein oder mehrere Peripherieadapter 80, welche über kabelgebundene Datennetzverbindungen E an jeweils eines der ein oder mehreren Edge-Gateways 10 ankoppelbar sind, aufweisen. Die Kommunikationsbasisstation 90 wird hierbei über eine kabelgebundene Datennetzverbindung E an einen Gefechtsstand 300 des taktischen Luftverteidigungssystems 200 angekoppelt, beispielsweise einen Führungsgefechtsstand oder einen Einsatzgefechtsstand, etwa für eine Einsatzführung und/oder eine Einsatzplanung.

Die Edge-Gateways 10 schaffen die Funkinfrastruktur, um gemäß einem gemeinsamen Kommunikationsprotokoll (Plug und Fight Protokoll) Daten zwischen der Kommunikationsbasisstation 90 und den Peripherieadaptern 80 auszutauschen. Die Peripherieadapter 80 sind ihrerseits jeweils über kabelgebundene Datennetzverbindungen E an jeweils eines der ein oder mehreren Edge-Gateways 10 angekoppelt und können ein Peripherieelement 500 als Netzwerkknoten datentechnisch in das Kommunikationssystem des taktischen Luftverteidigungssystems 200 einbinden.

Es ist dabei möglich, dass die Peripherieadapter 80 in jeweils ein Peripherieelement 500 fest integriert sind oder auch als mobile Geräte, d.h. als Unterstützungseinheiten bereitgestellt werden, welche in kommunikativer Datenverbindung mit jeweils einem zugehörigen Peripherieelement 500 stehen.

Zur Wahrung der Kommunikationskontrolle sind insbesondere die kabelgebundenen Datennetzverbindungen zwischen den Peripherieadaptern 80 und den Edge-Gateways 10 einerseits und zwischen der Kommunikationsbasisstation 90 und dem Gefechtsstand 300 abhörsicher ausgestaltet. Dabei kann es vorgesehen sein, dass zwischen den Peripherieadaptern 80 und den Edge-Gateways 10 keine Verschlüsselung erfolgt, aber eine besondere Kabelschirmung vorgesehen oder Glasfaserkabel für die kabelgebundenen Datennetzverbindungen eingesetzt werden.

In einer derartig abgesicherten Kernzelle können technische Elemente eines Kommunikationssystems für ein LVS zusammengefasst werden, über die der Betreiber die Steuer-, Kontroll- und Betriebshoheit erhalten will. In der Peripherie der Kernzelle können dann Elemente wie Sensoren (Überwachungsradargeräte, Zielverfolgungsradarsysteme, elektro-optische Sensoren etc.), Effektorsysteme (Flugkörper-Startgeräte, Flugabwehrkanonen, Laserkanonen für Nah- und Nächstbereichsverteidigung und Hochfrequenz-Waffen) sowie Unterstützungseinheiten (Erkundungssysteme, Nachladefahrzeuge, Logistikfahrzeuge etc.) angeordnet und über das Kommunikationssystem datentechnisch miteinander vernetzt werden.

Die Elemente der Peripherie können dann von unterschiedlichen Herstellern stammen, die jeweils mit proprietären, externen Schnittstellen arbeiten. Die Elemente der Peripherie können aber dennoch über die Kernzelle in Kommunikation zueinander und mit einem in der Kernzelle angeordneten Gefechtsstand gesetzt werden.

Wie in Fig. 2 angedeutet, können über die Kommunikationsbasisstation 90 außerdem Funkverbindungen nach außerhalb unterhalten werden, wie beispielsweise ein Gefechtsstandsfunknetz Y2 zwischen mehreren Gefechtsständen 300 des taktischen Luftverteidigungssystems 200 in unterschiedlichen Kernzellen K bzw. K2. Außerdem kann die Kommunikationsbasisstation 90 über Funkverbindungen Y1 mit hierarchisch übergeordneten Systemen Z wie etwa einer Kommandoebene kommunizieren.

Das Luftverteidigungssystem 200 nutzt primär möglichst breitbandige und weitreichende Funkverbindungen für den Datenaustausch zwischen dem Gefechtsstand 300 und den Peripherie-Elementen 500. Nachteilig kann sich dabei auswirken, dass im Gegensatz zu kabelgebundener Kommunikation (z.B. über Lichtwellenleiter) eine höhere Störanfälligkeit, begrenzte Frequenzspektrenverfügbarkeit und Pfadverluste (Freiraumdämpfung, atmosphärische Dämpfung, Polarisationsdämpfung, Ausrichtungsdämpfung, Hindernisdämpfung) auftreten können.

Dies kann zumindest teilweise dadurch kompensiert werden, dass Botschaften zwischen Gefechtsstand 300 und Peripherie-Elementen 500 transportpriorisiert werden. Die Prioritätsinformation wird in der Kernstruktur des Kommunikationssystems durch eine code-transparente Middleware geleitet und im IP-Header einer transportierten Botschaft abgebildet. Daher werden von der benutzten Middleware keine eigenen Dienstgütefunktionen (QoS-Parameter) gefordert bzw. benutzt. Zur Implementierung der geeigneten Middleware können Netzwerkschnittstellen in der Kommunikationsbasisstation 90 und/oder in den Edge-Gateways 10 bereitgestellt werden.

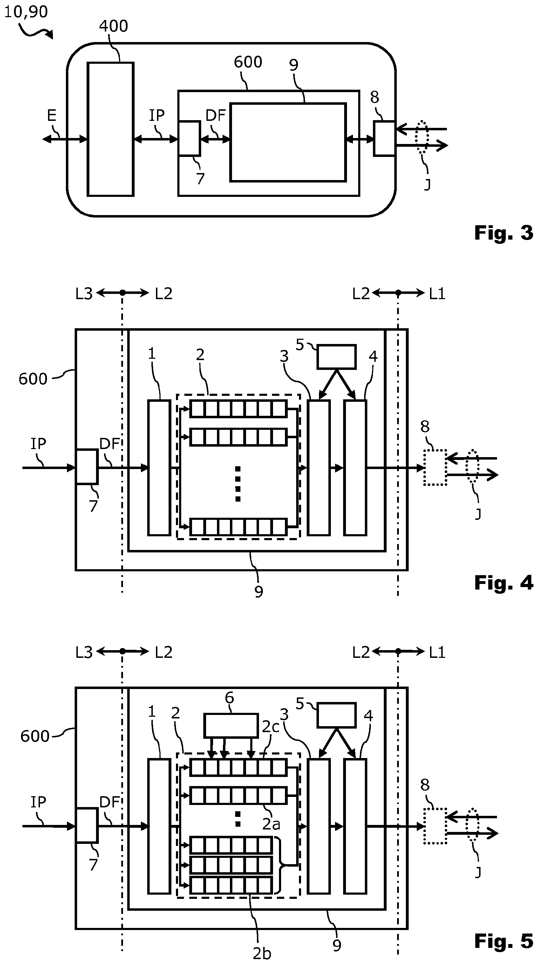

Fig. 3 zeigt eine beispielhafte Illustration der Netzwerkschnittstellenarchitektur für eine Kommunikationsbasisstation oder ein Edge-Gateway, wie beispielsweise die Kommunikationsbasisstation 90 oder eines der Edge-Gateways 10 der Fig. 2, für einen Einsatz in einer Netzwerkumgebung 100 in einem taktischen Luftverteidigungssystem 200, wie in Fig. 1 und Fig. 2 beispielhaft dargestellt. Es sollte klar sein, dass die Kommunikationsbasisstation oder das Edge-Gateway auch in anderen Netzwerkumgebungen eingesetzt werden können und dass die jeweilige Netzwerkschnittstellenarchitektur der Fig. 3 an die jeweiligen Anforderungen dieser Netzwerkumgebungen angepasst werden können. Beispielsweise können in der Netzwerkschnittstellenarchitektur entsprechende Kommunikationsprotokolle implementiert werden, um es dem Netzwerkknoten zu ermöglichen, in den jeweiligen Netzwerkumgebungen mit anderen Netzwerkknoten zu kommunizieren bzw. Daten auszutauschen.

Die beispielhaft dargestellte Netzwerkschnittstellenarchitektur umfasst eine Kommunikationssteuerung 400, welche die von der Kommunikationsbasisstation 90 oder dem Edge-Gateway 10 zu übertragenden Daten in paketbasierter Form aufbereitet und empfangene Datenpakete zur Auswertung der darin enthaltenen Informationen verarbeitet. Die Datenpakete IP werden mit einer Netzwerkschnittstelle 600 ausgetauscht, die eine Paketbearbeitungseinrichtung 7 aufweist, die als Schnittstelle zwischen der Vermittlungsschicht (Layer 3) auf Seiten der Kommunikationssteuerung 400 einerseits und der Sicherungsschicht (Layer 2) auf Seiten der Netzwerkschnittstelle 600 andererseits fungiert. Dabei werden die zu sendenden Datenpakete IP in Datenframes DF umgewandelt bzw. empfangene Datenframes DF als Datenpakete IP an die Kommunikationssteuerung 400 ausgegeben, d.h. die Paketbearbeitungseinrichtung 7 ist dazu ausgelegt, Datagramme auf Layer-3-Ebene in Datagramme auf Layer-2-Ebene und umgekehrt umzusetzen. Die Datenframes DF auf der Sicherungsschichtebene, beispielsweise MAC-Frames, werden von der Paketbearbeitungseinrichtung 7 an ein Medienzugriffssteuergerät 9 ("media access controller", MAC) abgegeben, welches die Datenframes DF prioritätsbasiert bearbeitet und zu sendende Daten an eine physikalische Datenübertragungseinrichtung 8 des Netzwerkknotens 10 bzw. 90 übergibt, so dass die Daten über ein gemeinsam genutztes Medium, beispielsweise einen Funkkanal D, übertragen werden können. Das gemeinsam genutzte Medium steht dabei in einem Zugriffswettbewerb, so dass die Netzwerkschnittstelle 30 Maßnahmen zur Kollisionsüberwachung implementieren kann und entsprechende Kollisionsüberwachungsergebnisse an das Medienzugriffssteuergerät 9 zurückgibt, beispielsweise in Form von die vollständige oder unvollständige Übertragung von Daten über den Funkkanal D bestätigende Signale (Quittierungssignale, sog. ACK-Signale).

Die Fig. 4 und 5 stellen beispielhafte Implementierungen von Medienzugriffssteuergeräten 9 innerhalb einer Netzwerkschnittstelle dar, beispielsweise der Netzwerkschnittstelle 600 der Fig. 2. Die Medienzugriffssteuergeräte 9 der Fig. 4 und 5 können jeweils in Netzwerkknoten 500 einer Netzwerkumgebung eines taktischen Luftverteidigungssystems implementiert werden, zum Beispiel in der Netzwerkumgebung 100 in einem taktischen Luftverteidigungssystem 200, wie in Fig. 1 und 2 beispielhaft dargestellt. Dabei können für unterschiedliche Netzwerkknoten 500 auch unterschiedliche Implementierungen der Medienzugriffssteuergeräte 9 gewählt werden, insbesondere im Hinblick auf die Art, Anzahl und Arbitrierung von Datenframewarteschlangen, die in den Medienzugriffssteuergeräten 9 ausgebildet werden können, sowie im Hinblick auf die jeweils zugeordneten Zugriffswettbewerbsparameter.

Beispielsweise können unterschiedliche Medienzugriffssteuergeräte 9 nach verschiedenen Kriterien bzw. Anforderungsprofilen des jeweiligen Netzwerkknotens 500, in dem sie eingesetzt werden sollten, gestaltet werden. Beispielhafte Kriterien können dabei sein: Zuordnung der zu sendenden Botschaftstypen zu differenzierten Servicecodepoints; Zuordnung der differenzierten Servicecodepoints zu Prioritätsstufen der Botschaften; Layout der Warteschlangen; Zuordnung der Prioritätsstufen zu den zu verwendenden Warteschlangentypen; Definition der Wettbewerbsparameter für den Kanalzugriff; Zuordnung der zu verwendenden Warteschlangentypen zu den Wettbewerbsparameter für den Kanalzugriff. Jedes Medienzugriffsteuergerät 9 kann diesbezüglich individuell konfiguriert werden, je nachdem ob sich das Medienzugriffsteuergerät beispielsweise im Gefechtsstand, in einem Radar oder in einem Startgerät des jeweiligen taktischen LV-Systems befindet.

Das Mediensteuergerät 9 der Fig. 4 und 5 umfasst in Sendereihenfolge betrachtet zunächst einen Klassifizierer 1, der Datenframes DF mit in den Headern der Datenframes DF enthaltenen Frameprioritätsinformationen von der Paketbearbeitungseinrichtung 7 einer Netzwerkschnittstelle 600 entgegennimmt. Die Datenframes DF können beispielsweise MAC-Frames sein, welche das Mediensteuergerät 9 auf der Sicherungsschicht, also auf der Layer 2 des OSI-Modells, verarbeitet. Die Frameprioritätsinformationen können beispielsweise in IEEE 802.1Q-normierten VLAN-Oktetts des MAC-Headers der Datenframes DF kodiert sein, und auf differenzierten Servicecodepoints (DSCPs) der in den MAC-Frames als Nutzlast enthaltenen IP-Datenpaketen IP basieren. Diese Umsetzung der DSCPs in Prioritätsstufen, die in den VLAN-Oktetts kodiert werden, kann beispielsweise durch die Paketbearbeitungseinrichtung 7 vorgenommen werden.

In taktischen Kommunikationssystemen eines LV-Systems sollten zeitkritische taktische Daten priorisiert gegenüber anderen Anwendungsdaten übertragen werden. So werden beispielsweise Zieltracks bzw. Targettracks in unterschiedliche Prioritätsstufen eingeteilt: Botschaften über kritische Zieltracks mit höchster Priorität, denen eine fest zugeordnete Bandbreite der verwendeten Wellenform zugeteilt ist und die mit höchster Genauigkeit und dadurch hohem Datenvolumen übertragen werden; Botschaften über bevorzugte Zieltracks mit mittlerer Priorität, deren Bandbreite je nach Anforderung zugeordnet wird und die mit mittlerer Genauigkeit und dadurch mittlerem Datenvolumen übertragen werden; und Botschaften über gewöhnliche Zieltracks mit niedriger Priorität, deren Bandbreite je nach freier Verfügbarkeit zugeordnet wird und die nur mit grober Genauigkeit und dadurch geringem Datenvolumen übertragen werden.

Der Gefechtsstand des LV-Systems kann aufgrund seiner Einschätzung der Bedrohung (Zieltyp, Zielverhalten, Schutzobjekt) den Botschaftstyp eines Zieltracks setzen und verändern. Dadurch kann sichergestellt werden, dass kritische Zieltracks immer zum Empfänger gelangen und gewöhnliche Zieltracks den Kanal nicht verstopfen. Die Paketbearbeitungseinrichtung 7 verwendet die Klassifikation der gesetzten Botschaftstypen dann als Kodierungsrichtlinie für die in den VLAN-Oktetts kodierten Prioritätsstufen.

Nach dem Klassifizierer 1, das heißt sendestromabwärts sind mindestens zwei Framewarteschlangen 2 in dem Mediensteuergerät 9 vorgesehen, welche dazu ausgelegt sind, Datenframes DF zwischenzuspeichern, die durch den Klassifizierer 1 in Abhängigkeit von den Frameprioritätsinformationen in eine der mindestens zwei Framewarteschlangen 2 einsortiert werden. Nach den mindestens zwei Framewarteschlangen 2 ist eine Zeitablaufsteuereinrichtung 3 ("scheduler") nachgeschaltet, welche zwischengespeicherte Datenframes DF gemäß einer vorbestimmten Arbitrationslogik aus einer durch die Arbitrationslogik vorgegebenen Sequenz von Framewarteschlangen 2 entnimmt. Die entnommenen Datenframes DF werden dann entsprechend ihrer Reihenfolge der Entnahme sequentieller Ausgabeframestrom an eine Kollisionserkennnungseinrichtung 4 ausgegeben. Die Arbitrationslogik kann beispielsweise durch eine Netzwerkkonfigurationseinrichtung 5 vorgegeben werden, welche auch den Betrieb der Kollisionserkennnungseinrichtung 4 konfigurieren kann. In einigen Varianten können für die Zeitablaufsteuereinrichtung 3 und die Kollisionserkennnungseinrichtung 4 auch unterschiedliche Konfigurationseinrichtungen vorgesehen werden, oder die jeweilige Konfiguration kann fest in die Schaltungen der Zeitablaufsteuereinrichtung 3 und/oder der Kollisionserkennnungseinrichtung 4 einprogrammiert werden.

Die Zeitablaufsteuereinrichtung 3 kennt die Priorisierung der jeweiligen Framewarteschlangen 2, so dass beispielsweise eine Framewarteschlange 2 in der höchsten Priorisierungsstufe immer sofort dann in die Entnahmesequenz von Datenframes DF eingebunden wird, sobald ein Datenframe DF am Warteschlangenausgang ansteht. Framewarteschlangen 2 in der niedrigsten Priorisierungsstufe können beispielsweise nur dann in die Entnahmesequenz von Datenframes DF eingebunden werden, wenn ein Kanalzugriff möglich ist und gleichzeitig keine andere der Framewarteschlangen 2 einen Datenframe DF an ihrem Ausgang anstehen hat.

Die mindestens zwei Framewarteschlangen 2 können je nach Anwendung auf verschiedenen Warteschlangenprinzipien beruhen, beispielsweise auf dem Windhundprinzip ("First-in First-out", FIFO), dem Prinzip der Vorrangwarteschlange (Priority Queuing, PQ), dem Fair Queuing (FQ), dem gewichteten Fair Queuing ("weighted fair queuing", WFQ), der Rundlaufarbitrierung ("Round-Robin"), dem Prinzip des Earliest Deadline First (EDF) oder dem Rate Monotonic Scheduling (RMS). Jedes dieser Warteschlangenprinzipien erstellt einen Zeitablaufplan ("schedule"), gemäß dessen die Entnahmereihenfolge von in der Warteschlange zwischengespeicherten bzw. gepufferten Datenframes eingeplant wird. Dadurch wird die nur beschränkt verfügbare Ressource der Kanalzugriffszeit den jeweiligen Datenframes je nach Warteschlange zugeteilt. Die verschiedenen Warteschlangenprinzipien beruhen auf der Abwägung unterschiedlicher Ressourcennutzungskriterien wie etwa Datendurchsatz, Bearbeitungseffizienz, Ressourcenzuteilungsfairness oder Terminierungseinhaltung.

Die Kollisionserkennnungseinrichtung 4 speist den von der Zeitablaufsteuereinrichtung 3 gemäß der Arbitrationslogik erstellten sequentiellen Ausgabeframestrom in einen physikalischen Datenübertragungskanal D ein, beispielsweise über die die physikalische Datenübertragungseinrichtung 8 der Netzwerkschnittstelle 600. Diese physikalische Datenübertragungseinrichtung 8 kann der Kollisionserkennnungseinrichtung 4 auch Rückmeldung über Erfolg oder Misserfolg beim Senden einzelner Datenframes DF geben, wodurch die Kollisionserkennnungseinrichtung 4 beispielsweise in die Lage versetzt wird, entsprechende Maßnahmen zur Steuerung des Zugriffswettbewerbs auf den Übertragungskanal zu initiieren. Dazu kann die Kollisionserkennnungseinrichtung4 beispielsweise die einzelnen Datenframes DF des sequentiellen Ausgabeframestroms gemäß vorbestimmter Zugriffswettbewerbsparameter in den physikalischen Datenübertragungskanal einspeisen. Diese Zugriffswettbewerbsparameter können auf der Basis von Zugriffswettbewerbsindikatoren erstellt werden, die von der Zeitablaufsteuereinrichtung 3 für den jeweils zuletzt aus einer der Framewarteschlangen 2 entnommenen Datenframe DF an die Kollisionserkennnungseinrichtung 4 ausgegeben werden.

Für verschiedene Framewarteschlangen können damit unterschiedliche Zugriffswettbewerbsindikatoren angegeben werden, beispielsweise der zu verwendende Arbitrated Interframe Space (AIFS), das heißt die minimale Wartezeit nach einem Kanalzugriff auf das Übertragungsmedium, nach der ein erneuter Zugriff stattfinden soll/darf. Weitere Zugriffswettbewerbsindikatoren können eine Transmission Opportunity (TXOP), das heißt Anfang und Dauer eines ein Senderecht sichernden Sendeintervalls, Länge eines Wettbewerbsfensters ("contention window", CW) oder eine Anzahl maximal zulässiger Kanalzugriffsiterationen nach Scheitern eines Kanalzugriffs sein.

Je nach Zugriffswettbewerbsparametern und Rückmeldungen der physikalischen Datenübertragungseinrichtung 8 kann die Kollisionserkennnungseinrichtung 4 individuell konfiguriert werden, je nachdem ob sich das Medienzugriffsteuergerät 9 beispielsweise in der Kommunikationsbasisstation 90, im Edge-Gateway 10 eines Radars oder im Edge-Gateway 10 eines Startgerätes des jeweiligen taktischen LVS 200 befindet. Weiterhin kann die Kollisionserkennnungseinrichtung 4 Quittierungssignale über die kollisionsfreie (oder kollisionsbehaftete) Übertragung eines Datenframes DF an die Zeitablaufsteuereinrichtung 3 ausgeben. Die Zeitablaufsteuereinrichtung 3 kann beispielsweise erst dann einen neuen Datenframe DF aus einer der Framewarteschlangen 2 entnehmen, wenn ein entsprechendes Quittierungssignal für den vorangegangenen Datenframe DF erhalten worden ist.

In Fig. 5 ist ein Beispiel für Framewarteschlangen 2a, 2b, 2c mit verschiedenen Warteschlangenprinzipien dargestellt. Die Framewarteschlange 2a kann beispielsweise eine reine FIFO-Warteschlange sein, in der die Datenframes DF in der zeitlichen Reihenfolge ihrer Einsortierung von alt nach jung abgearbeitet werden. Die Framewarteschlange 2c kann beispielsweise eine Earliest Deadline First (EDF) sein, bei der eine Terminierungseinrichtung 6 die Adressindikatoren für den Ablauf der Datenframes DF ausliest und in die Arbitrationslogik als Logikparameter einfließen lässt. Die Terminierungseinrichtung 6 kann beispielsweise auch dazu ausgelegt sein, Datenframes in der Framewarteschlange 2c, die bereits abgelaufen sind, aus der Framewarteschlange 2c zu entfernen.

Die Framewarteschlangen 2b sind WFQ-Warteschlangen, bei denen jede der Framewarteschlangen 2b ein Priorisierungsgewicht aufweist, und bei der ein gemeinsamer Zugriff der Zeitablaufsteuereinrichtung 3 ein festgelegte Abrufreihenfolge einhält, sobald die Gruppe der Framewarteschlangen 2b in der hierarchisch übergeordneten Entnahmesequenz ansteht.

Es sollte klar sein, dass die in den Fig. 4 und 5 dargestellten Anordnungen von Framewarteschlangen 2a, 2b, 2c nur beispielhafter Natur sind, und dass andere Gruppierungen von Framewarteschlangen 2 hinsichtlich Anzahl, Art und Arbitrierungsparametern ebenso gewählt werden können.

Das Medienzugriffssteuergerät 9 ist auf der Sicherungsschicht (Layer 2, L2) angesiedelt und verarbeitet Datenframes DF wie etwa MAC-Frames, die von der Vermittlungsschicht (Layer 3, L3) her eingespeist werden. Nach der Verarbeitung der Datenframes DF durch das Medienzugriffssteuergerät 9 werden sie an die physikalische Übertragungsschicht (Layer 1, L1) abgegeben, in der der tatsächliche Kanalzugriff erfolgt.

Für eine Transportpriorisierung kann zunächst eine Paketauswahl im Medienzugriffssteuergerät 9 gemäß des Warteschlangenprinzips auf deterministische Art und Weise getroffen werden. Danach erfolgt eine Auswahl des Edge-Gateways 10 bzw. der Kommunikationsbasisstation 90 im Wettbewerb, das auf das Transportmedium zugreifen darf über eine stochastische, dezentrale Zugriffsmethode. Medienzugriffssteuergeräte 9 können als Funkgerät in einem Edge-Gateway 10 bzw. der Kommunikationsbasisstation 90 implementiert werden.

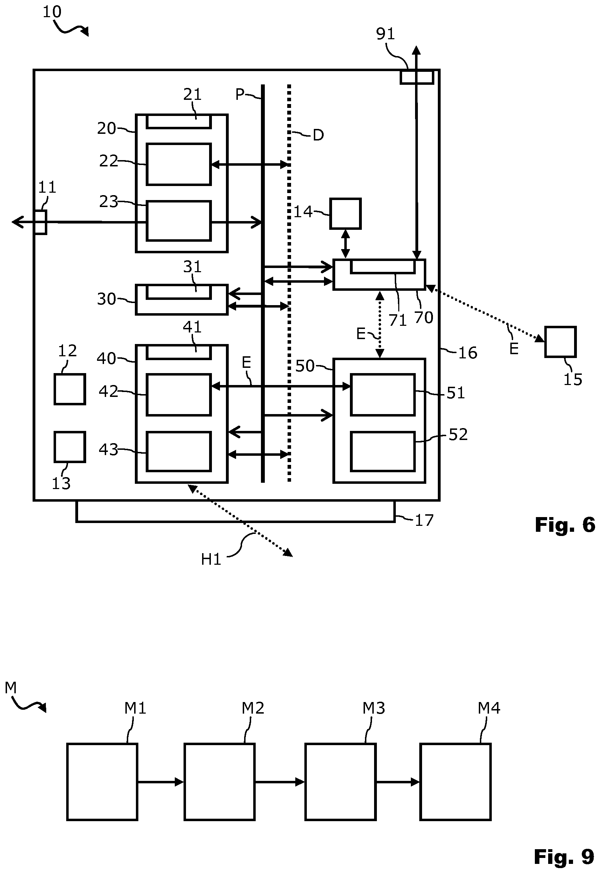

Fig. 6 zeigt ein schematisches Blockschaubild eines Edge-Gateways 10. Das Edge-Gateway 10 weist zunächst einen Container 16 auf. Der Container 16 ermöglicht den Einbau bzw. Anbau von Komponenten des Edge-Gateways 10 im Innenraum bzw. an den Außenseiten. Der Container 16 kann beispielsweise ein quaderförmiges Hohlkonstrukt aus Stahl oder einem anderen geeigneten Material sein. Im Innenraum des Containers 16 kann ausreichend Bauraum für die diversen Kommunikationskomponenten inklusive Funkgerät sowie einen Arbeitsplatz für das Management der Netzwerke und Domänen und einen Arbeitsplatz für die Bedienung der diversen Komponenten des Edge-Gateways 10 aufweisen.

Der Container 16 kann geeignete Schließmechanismen aufweisen, beispielsweise solche, die der DIN-Norm 18251 für außen angebrachte Stauvorrichtungen genügen. Weiterhin kann der Container 16 in einer speziellen Stauvorrichtung mehrere Kabeltrommeln 13 aufnehmen, auf denen Ethernet-Kabel zur direkten Verbindung mit den Peripherieadaptern 80 aufgerollt sein können. Der Container 16 kann zudem in einem Außenraum persönliche Ausrüstungsgegenstände von Operatoren und Bedienpersonal, Erdungsvorrichten und Blitzschutzvorrichtungen aufnehmen. Der Container 16 kann im Innenraum geeignete Brandschutzmaßnahmen wie etwa Rauchmelder oder Feuerlöscher aufnehmen. Zudem kann der Innenraum des Containers 16 durch Trockenmittel gegenüber Tau oder Schwitzwasser geschützt werden.

Das Edge-Gateways 10 umfasst generell ein in dem Container 16 angeordnetes Kommunikationssubsystem 50, eine in dem Container 16 angeordnete Schnittstellenvorrichtung 70, eine außen oder innen an dem Container 16 angebaute Antenneneinrichtung 40, und eine Energieversorgungseinrichtung 20. Ferner kann das Edge-Gateway 10 eine außen an dem Container 16 angebaute Klimaanlage 30 mit einem Bedienpanel 31 umfassen, welche dazu ausgelegt ist, den Container 16 zu klimatisieren. Darüber hinaus kann das MOWABS 10 ein außen an dem oder im Container 16 angeordnetes Navigationsgerät 14 aufweisen.

Der Container 16 kann über eine an der Unterseite des Containers 16 montierte Adaptervorrichtung 17 auf einem Kraftfahrzeug oder einem Kraftfahrzeuganhänger montiert werden.

Das Kommunikationssubsystem 50 kann einen Kommunikations- und Routingrechner 51, einen IT-Sicherheitscontroller 52 mit einer Zeitsynchronisierungseinheit und eine Administratorkonsole aufweisen. Dabei kann eine nicht gehärtete Variante eines Kommunikationssubsystems 50 gewählt werden, da sie sich im Inneren des Containers 16 befindet. Das Kommunikationssubsystem 50 stellt ein transparentes, IP-basiertes Netzwerk zur Verfügung, in dem Domänen unterschiedlicher Sicherheitsstufen integriert sind. Der Kommunikations- und Routingrechner 51 kann Anwendungssoftware für NAT-Routing, VoIP-Telekommunikationsanlage, Netzwerkmanagement, Statusüberwachung, und Fernwartungszugriff aufweisen. Ferner kann ein Switch mit elektrischen und optischen Anschlüssen vorgesehen werden, welcher eine Anbindung aller Domänenkomponenten ermöglicht. Außerdem kann das Kommunikationssubsystem 50 über ein Schlüsselgerät, einen Analog-Telefon-Adapter und eine Spannungs- und Stromverteilungseinheit verfügen.

Das Kommunikationssubsystem 50 beinhaltet ein Funkgerät, welches Punkt-zu-Punkt- sowie Punkt-zu-Mehrpunkt-Verbindungen aufbauen kann, OFDM-Verfahren zur drahtlosen Hochgeschwindigkeitsdatenübertragung unterstützt, militärisch relevante Frequenzbänder unterstützt, geringe Latenz für bandbreitenintensive Echtzeitanwendungen aufweist, eine erweiterte Störerunterdrückung mit automatischer Sendeleistungsregelung und adaptiver Modulation beinhaltet, zusammen mit Funkantennen (Sektor-, Richtfunk- oder Stabantenne) betrieben werden kann, eine Antennenausrichtungseinheit aufweist sowie ein geringes Gewicht und eine geringe Größe für eine direkte Montage an einem Antennenmast aufweist. Das Funkgerät setzt die Funktionen eines Medienzugriffssteuergerätes 9 gemäß der Fig. 3 bis 5 um.

Das Funkgerät des Kommunikationssubsystems 50 kann beispielsweise an einem Antennenmast der Antenneneinrichtung 40 zusammen mit einer in der Antenneneinrichtung 40 umfassten Funkantenne 43 montiert werden. Die Funkantenne (Sektor-, Richtfunkantenne) kann dabei mittels des Antenneneinrichtungsbedienpanels 41 der Antenneneinrichtung 40 elektrisch im Azimutwinkel und im Elevationswinkel ausrichtbar sein. Die Antenneneinrichtung 40 steht mit dem Kommunikationssubsystem 50 über eine diskrete Datenbusleitung in kommunikativer Verbindung.

Die Antenneneinrichtung 40 kann ein Antennenfunkgerät 42, zumindest eine Funkantenne 43 und ein Antenneneinrichtungsbedienpanel 41 aufweisen. Mehrere Sektorantennen oder Richtfunkantennen werden vorzugsweise dann verwendet, wenn mehrere Gefechtsstände parallel in Echtzeit mit Bild-/Videodaten beispielsweise über ein Weitbereichsfunknetz versorgt werden müssen. Funkantennen 43 können zusammen mit dem Funkgerät des Kommunikationssubsystems 50 an einem zumindest 10 Meter hohen Rohrmast mit zugehöriger Aufrichteinheit montiert werden. Die Aufrichteinheit kann den Antennenmast in Betriebsstellung (senkrecht zum Container) oder in Transportstellung (waagerecht zum Container) heben bzw. kippen. In der Betriebsstellung kann der Antennenmast entsprechend nivelliert werden. Eine Teleskopfunktion des Antennenmastes ermöglicht die kontinuierliche Verstellung der Masthöhe. Ein mobiles Bedienpanel im Innenraum des Containers 16 kann zur Bedienung des Antennenmastes eingesetzt werden, auf dem zusätzlich Betriebsinformationen der Antenneneinrichtung 40 angezeigt werden können. Der Antennenmast kann mit elektrischer Energie betrieben werden, so dass keine Hydraulik oder Pneumatik notwendig ist. Das Antennenfunkgerät 42 und die Funkantenne 43 können auf dem außen am Container 16 angebrachten Antennenmastsystem an der Spitze angebracht werden.

Die Energieversorgungseinrichtung 20 weist eine Energiequelle 23 auf und ist dazu ausgelegt, das Kommunikationssubsystem 50 und die Antenneneinrichtung 40 mit elektrischer Energie zu versorgen. Dazu kann das Energieversorgungssystem 20 über eine vibrationsarme Brennstoffzelle mit einer daran angeschlossenen Batterie als Energiequelle 23 zur Gewährleistung einer unterbrechungsfreien Stromversorgung (USV) verfügen, die die elektrische Energie in ein Stromnetz P des Edge-Gateways 10 einspeist. Aus dem Stromnetz können die jeweiligen anderen Komponenten des Edge-Gateways 10 mit Energie versorgt werden.

Die Energieversorgungseinrichtung 20 weist zudem eine Energieversorgungsmanagementkomponente 22 und ein Energieversorgungseinrichtungsbedienpanel 21 auf. Die Energieversorgungsmanagementkomponente 22 ermöglicht die manuelle und automatische Steuerung der Stromversorgung, der Klimatisierung über die Klimaanlage 30, der Schnittstelleneinrichtung 70, des Antennenmastes, des Kommunikationssubsystems 50 und der Beleuchtung des Containers 16. Damit dient die Energieversorgungsmanagementkomponente 22 als Containersteuergerät. Die Energieversorgungsmanagementkomponente 22 unterhält eine Ethernetverbindung zum Kommunikations- und Routingrechner 51 des Kommunikationssubsystems 50 und zur Schnittstelleneinrichtung 70, um eine Fernwartung, Fernkonfiguration und einen Datentransfer zu ermöglichen. Die Datenkommunikation kann dabei bevorzugt paketbasiert erfolgen, beispielsweise in einem Zeitmultiplexübertragungsverfahren (TDMA) oder einem Codemultiplexverfahren (CDMA). Die Energieversorgungsmanagementkomponente 22 kann sicherstellen, dass der Innenraum des Containers 16 ausreichend durch die Klimaanlage 30 klimatisiert ist, bevor die installierten elektrischen Komponenten aktiviert werden, um für betriebsfähige Umweltbedingungen zu sorgen.

Die Stromversorgung über die Energiequelle 23 kann vorzugsweise durch eine vibrationsarme Brennstoffzelle, eine Verteilereinheit und einen Akkumulator gewährleistet werden. Die Komponenten sind durch ein Dämpfungssystem mit dem Container 16 verbunden, um die Übertragung von Vibrationen auf den Container 16 und damit auf die multispektrale Sensorik zu vermeiden. Die Brennstoffzelle kann mit Methanol betrieben werden, ist akustisch ab einer Entfernung von etwa sieben Metern nicht mehr wahrnehmbar, erzeugt kaum detektierbare Emissionen und ist wartungsarm. Die Energiequelle 23 ermöglicht einen autonomen Betrieb für mindestens 32 Stunden ohne Eingriff durch einen Operator und kann von außen mit Spannungen alternativ zur eigenen Spannungsversorgung versorgt werden. Der Wechsel von der eigenen Brennstoffzellspannung zu einer externen Spannungsversorgung und umgekehrt ist dabei unterbrechungsfrei möglich. Es erfolgt hierbei ein automatischer Wechsel im Falle des Spannungsverlustes der aktuellen Quelle oder ein manueller Wechsel mit Hilfe des Energieversorgungseinrichtungsbedienpanels 21. Ferner kann die Energiequelle 23 Hilfsspannung über einen Hilfsspannungsanschluss 11 nach außen liefern und verfügt über einen Not-Aus-Schalter, mit dem die Energiequelle 23 im Notfall deaktiviert werden kann, wenn der Schalter betätigt wird. Der Not-Aus-Schalter kann beispielsweise ein roter Knopf sein.

Die Klimaanlage 30 mit dem Bedienpanel 31 hält Temperatur und Feuchtigkeit im Containerinneren im für den Betrieb der elektrischen Komponenten zulässigen Bereich. Die Klimaanlage 30 liefert zudem Frischluft über einen Staub-/NBC-Filter in den Innenraum des Containers 16. Die Klimaanlage 30 transportiert die Wärmeleistung aus dem Innenraum des Containers 16 nach außen und ist durch ein Dämpfungssystem mit dem Container 16 verbunden.

Die Schnittstelleneinrichtung 70 kann ein lokales Display 71 für einen Operator aufweisen. Neben der Möglichkeit der Umschaltung zwischen lokalem und ferngesteuertem Betrieb der Komponenten des Edge-Gateways 10 ermöglicht die Schnittstelleneinrichtung 70 eine geordnete Deaktivierung aller Komponenten. In einem entnehmbaren und über USB oder SATA auslesbaren Speicher (z.B. ein Flash-SSD) der Schnittstelleneinrichtung 70 können verschiedene Betriebsparameter mit Zeitstempeln gespeichert werden, wie etwa Betriebsstunden, Sensorstatus, Fehlercodes, Fehlerbilder, Logdateien von Fehlfunktionen, Testergebnisse, Videos, Snapshots, Konfigurationsdaten, Prognostikdaten sowie unterschiedliche Versionen der Betriebssoftware.

Die Schnittstelleneinrichtung 70 kann ferner eine Energieverteilungseinheit aufweisen, die die verfügbare Leistung auf die Elemente des Edge-Gateways 10 verteilen kann. Die Schnittstelleneinrichtung 70 kann des Weiteren als zentrale Verteilerstelle für Daten dienen und kann hierzu über eine kabelgebundene Datennetzverbindung E mit anderen Komponenten in kommunikativer Verbindung stehen. Die kabelgebundene Datennetzverbindung E kann dabei beispielsweise eine Ethernet-Verbindung sein, die über einen zentralen Datenbus D innerhalb des Edge-Gateways 10 zwischen den jeweiligen Knoten vermittelt wird.

Die Schnittstelleneinrichtung 70 kann ferner über eine Schnittstelle 91 mit mehreren Pins bzw. Anschlüssen verfügen, über die ein oder mehrere Peripherie-Adapter 80 an das Edge-Gateway 10 angeschlossen werden können. Die lokale Kommunikation mit den ein oder mehreren Peripherie-Adaptern 80 kann in einer sogenannten "Plug&Fight"-Verbindung erfolgen, d.h. unverschlüsselt und in einem Standardformat für jeden der an die Schnittstelle 91 angebundenen Peripherie-Adapter 80.

Die Schnittstelleneinrichtung 70 kann Daten jeweils mit Datenquelle und Zeitstempel über einen Zeitraum von 200 Betriebsstunden in einem verschlüsselten Standardformat für jeden angeschlossenen Peripherie-Adapter 80 speichern und den kompletten Inhalt auf Anforderung zur Kommunikationsbasisstation 90 transferieren. Diese Daten können beispielsweise Status des Peripherie-Adapters 80, Fehlerbilder, Fehlercodes, Testergebnisse (PBIT, CBIT, IBIT), Fehlerlokalisierungsdaten, Abschätzung der Restnutzungsdauer und des Wartungs-/Reparaturbedarfes (Prognostikdaten), Videos und SnapShots sowie Konfigurationsdaten umfassen.

Das Navigationsgerät 14 kann beispielsweise eine Trägheitsmesseinheit ("inertial measurement unit", IMU) aufweisen, die lineare, inertiale, sensorfeste Beschleunigungsmessgeräte und sensorfeste Winkelgeschwindigkeitsmessgeräte umfassen kann. Das Navigationsgerät 14 kann zudem Satellitensignale eines globalen Positionierungssystems wie etwa GPS, Galileo oder GLONASS auch für Zeitsynchronisationszwecke verarbeiten. Eine Antenne des globalen Positionierungssystems kann zusammen mit dem Navigationsgerät 14 in ein Kopflastrahmengestell eingebaut sein, so dass eine gute Sichtbarkeit der Navigationssatelliten gewährleistet ist.

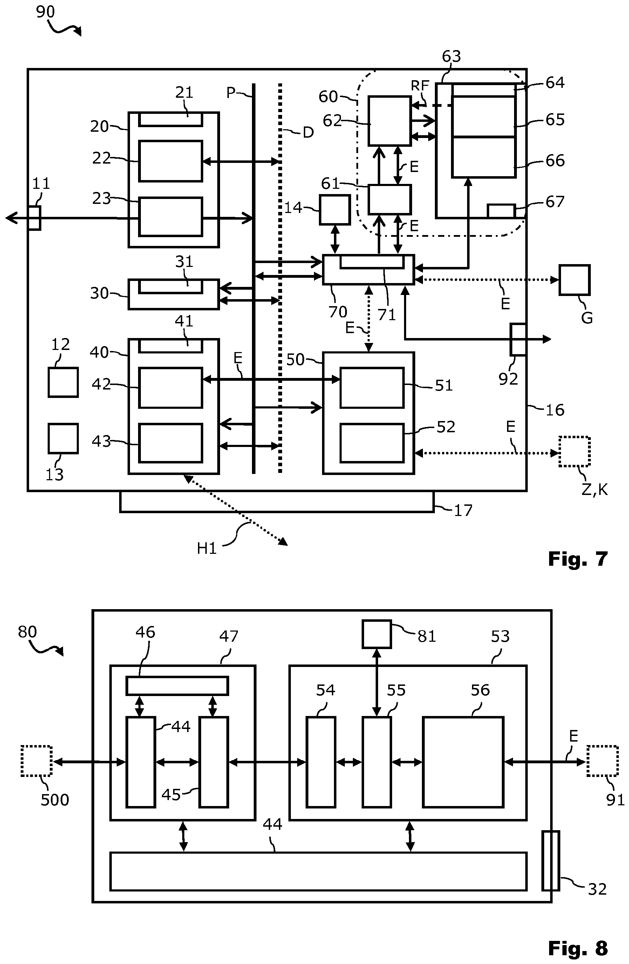

Fig. 7 zeigt ein schematisches Blockschaubild einer Kommunikationsbasisstation 90, welche in einer Netzwerkumgebung eines taktischen Luftverteidigungssystems eingesetzt werden, wie beispielsweise der Netzwerkumgebung 100 des im Bezug auf die Fig. 1 und 2 beispielhaft illustrierten taktischen Luftverteidigungssystems 200.

Die Hauptfunktionen der Kommunikationsbasisstation 90 umfassen einerseits das Bereitstellen einer funktionaltopologisch zentralen Basisstation eines Kommunikationssystems in einem Kern bzw. einer Kernzelle K eines taktischen Luftverteidigungssystems 200 mit einer Wellenform, welche die Kommunikation zwischen einem Gefechtsstand 300 und den zugehörigen Netzwerkkomponenten in der Peripherie steuert. Andererseits dient die Kommunikationsbasisstation 90 zur Etablierung eines Gefechtsstandfunknetzes zur Kommunikation mit anderen Gefechtsständen anderer Kernzellen K2 mit einer stochastischen Wellenform.

Weiterhin ist die Kommunikationsbasisstation 90 dazu ausgelegt, eine Kommunikation mit übergeordneten Kommandoebenen oder anderen LVS über konventionelle taktischen Datenlinks zu gewährleisten.

Über eine Gefechtsstandsschnittstelle 92 kann die Schnittstellenvorrichtung 70 der Kommunikationsbasisstation 90 an einen Gefechtsstand G bzw. 300 angebunden werden.

Grundsätzlich kann die Kommunikationsbasisstation 90 der Fig. 7 ähnliche Bestandteile bzw. Funktionselemente wie die Edge-Gateways 10 der Fig. 6 aufweisen, die in oder an einem Container 16 untergebracht werden können. Der Grundrahmen der Kommunikationsbasisstation 90 kann auf einen ISO-Containertragrahmen eines Leiterrahmens eines Träger-LKWs montiert werden. Dieser Containertragrahmen kann ISO 20 Fuß Twistlock-Verriegelungen aufweisen, so dass der Container 16 mittels 20 Fuß ISO-Eckbeschlägen befestigt wird. Der Grundrahmen kann dann den Antennenmast der Antennenvorrichtung 40 mit angebauten Kommunikationskomponenten, ein Nivellierungssystem sowie die IT-Komponenten des Kommunikationssubsystems 50 aufnehmen. Damit kann der Grundrahmen mit dem Antennenmast der Antennenvorrichtung 40 sowohl mit militärischen LKWs als auch mit zivilen Transporteinheiten wie etwa LKWs oder Eisenbahnwaggons wie ein Standard-Container transportiert werden.
Das hydraulische Nivellierungssystem der Kommunikationsbasisstation 90 kann mit aus- bzw. einfahrbaren Stützen am Grundrahmen installiert werden und kann zwei Funktionen erfüllen: Das Stabilisieren und Nivellieren des Antennenmastes mittels ausgefahrener, hydraulischer Stützen, sowie das Anheben des Antennenmastes der Antennenvorrichtung 40 samt Grundrahmen vom Träger-LKW nach Lösen der Twistlock-Verriegelungen. Während des Transports überschreiten dabei alle Teile des Nivelliersystems die Abmessungen der ISO 20 Fuß Außenmaße nicht. Die erforderliche hydraulische Energie hierzu kann vom Träger-LKW bezogen werden.

Mittels eines Panels kann der Bediener das Ein- und Ausfahren der hydraulischen Stützen steuern und anhand eines Level-Sensors und der am Antennenmast der Antennenvorrichtung 40 gemessenen Winkel die vertikale Ausrichtung (Nick-, Rollwinkel) des Antennenmasts 43 ausregeln. Der Antennenmast der Antennenvorrichtung 40 kann aufgrund der Bauhöhe ein hydraulisch betriebener, teleskopischer Gittermast sein, der auf dem Grundrahmen über ein Kippsystem montiert ist. Mittels dieses Kippsystems kann der Antennenmast der Antennenvorrichtung 40 dann aus dem Transportmodus (horizontale Position) in den Betriebsmodus (vertikale Position) mittels hydraulischer Energie bewegt werden.

Die Masthöhe kann je nach Ausfahrzustand zwischen 10 Meter und 30 Meter (gemessen vom Boden bis zur höchst montierten Antenne) und das Gesamtgewicht etwa 12 Tonnen betragen. Durch das Nivellierungssystem kann der Antennenmast der Antennenvorrichtung 40 für längere Abschaltzeiten vom Träger-LKW abmontiert werden.

Am Antennenmast können Sensoren montiert werden, mittels derer Windgeschwindigkeits- und Neigungswinkeldaten gemessen und dem Bediener am Panel zur Anzeige gebracht werden. Zudem kann am Antennenmast eine Flutlichtanlage angebaut werden, die ebenso vom Panel bedienbar ist.

Die Kommunikationsbasisstation 90 kann zumindest zwei unterschiedliche Funkkommunikationsanlagen aufweisen, eine als Basisstation für das Kommunikationssystem der Netzwerkumgebung 100 des taktischen Luftverteidigungssystems 200 als transparentes, IP-basiertes Netzwerk mit deterministischen oder dezentralem, stochastischem Kanalzugriff (z.B. über IEEE 802.16e), und eine andere als Netzwerkknoten als Teilnehmer in einem (voll)vermaschten Gefechtsstandfunknetz als Ad-Hoc-Netzwerk, in dem verschiedene Gefechtsstände untereinander kommunizieren können. In letzterem Funknetz kann die Datenübertragung durch konkurrenzbasierte, stochastische Kanalzugriffe (z.B. IEEE 802.11n) bewerkstelligt werden, so dass keine dedizierte Basisstation erforderlich ist.

Optional können weitere Funkkommunikationsanlagen in der Kommunikationsbasisstation 90 vorgesehen werden, die für die Kommunikation mit übergeordneten Kommandostellen über taktische Datenlinks wie etwa Link11/16/22 oder ADatP-3 sorgen.

Die Antenneneinrichtung 40 kann - ähnlich wie beim Edge-Gateway 10 der Fig. 6 - ein Antennenfunkgerät 42, zumindest eine Funkantenne 43 und ein Antenneneinrichtungsbedienpanel 41 aufweisen. Mehrere Sektorantennen oder Richtfunkantennen, beispielsweise mindestens vier, werden vorzugsweise dann verwendet, wenn mehrere Gefechtsstände parallel in Echtzeit mit Bild-/Videodaten beispielsweise über ein Weitbereichsfunknetz versorgt werden müssen, um die Kommunikationsreichweite zu vergrößern. Jede der Antennen kann dabei um die Roll- und Nickachse durch eine Antennenrichteinheit drehbar sein, um die optimale Ausrichtung zu dem jeweiligen Kommunikationspartner zu gewährleisten. Für das (voll)vermaschte Gefechtsstandsfunknetz mit Netztopologie können vorzugsweise Stabantennen als Rundumstrahler montiert werden, ebenso können aber auch Sektorantennen eingesetzt werden. Für die taktischen Datenlinks wie Link11/16/22 oder ADatP-3 können vorzugsweise gerichtete Antennen benutzt werden.

Das Kommunikationssubsystem 50 kann - ähnlich wie beim Edge-Gateway 10 der Fig. 6 - einen Kommunikations- und Routingrechner 51, einen IT-Sicherheitscontroller 52 mit einer Zeitsynchronisierungseinheit und eine Administratorkonsole aufweisen. Dabei kann eine nicht gehärtete Variante eines Kommunikationssubsystems 50 gewählt werden, da sie sich im Inneren des Containers 16 befindet. Das Kommunikationssubsystem 50 stellt ein transparentes, IP-basiertes Netzwerk zur Verfügung, in dem Domänen unterschiedlicher Sicherheitsstufen integriert sind. Der Kommunikations- und Routingrechner 51 kann Anwendungssoftware für NAT-Routing, VoIP-Telekommunikationsanlage, Netzwerkmanagement, Statusüberwachung, und Fernwartungszugriff aufweisen. Ferner kann ein Switch mit elektrischen und optischen Anschlüssen vorgesehen werden, welcher eine Anbindung aller Domänenkomponenten ermöglicht. Außerdem kann das Kommunikationssubsystem 50 über ein auf Ethernet-Ebene operierendes Schlüsselgerät, ein Border Protection Gateway, einen Analog-Telefon-Adapter und eine Spannungs- und Stromverteilungseinheit verfügen.

Die Energieversorgungseinrichtung 20 weist - ähnlich wie beim Edge-Gateway 10 der Fig. 6 - eine Energiequelle 23 auf und ist dazu ausgelegt, das Kommunikationssubsystem 50 und die Antenneneinrichtung 40 mit elektrischer Energie zu versorgen. Dazu kann das Energieversorgungssystem 20 über eine vibrationsarme Brennstoffzelle mit einer daran angeschlossenen Batterie als Energiequelle 23 zur Gewährleistung einer unterbrechungsfreien Stromversorgung (USV) verfügen, die die elektrische Energie in ein Stromnetz P des Edge-Gateways 10 einspeist. Aus dem Stromnetz können die jeweiligen anderen Komponenten des Edge-Gateways 10 mit Energie versorgt werden.

Die Energieversorgungseinrichtung 20 weist zudem eine Energieversorgungsmanagementkomponente 22 und ein Energieversorgungseinrichtungsbedienpanel 21 auf. Die Energieversorgungsmanagementkomponente 22 ermöglicht die manuelle und automatische Steuerung der Stromversorgung, der Klimatisierung über die Klimaanlage 30, der Schnittstelleneinrichtung 70, des Antennenmastes, des Kommunikationssubsystems 50 und der Beleuchtung des Containers 16. Damit dient die Energieversorgungsmanagementkomponente 22 als Containersteuergerät. Die Energieversorgungsmanagementkomponente 22 unterhält eine Ethernetverbindung zum Kommunikations- und Routingrechner 51 des Kommunikationssubsystems 50 und zur Schnittstelleneinrichtung 70, um eine Fernwartung, Fernkonfiguration und einen Datentransfer zu ermöglichen. Die Datenkommunikation kann dabei bevorzugt paketbasiert erfolgen, beispielsweise in einem Zeitmultiplexübertragungsverfahren (TDMA) oder einem Codemultiplexverfahren (CDMA). Die Energieversorgungsmanagementkomponente 22 kann sicherstellen, dass der Innenraum des Containers 16 ausreichend durch die Klimaanlage 30 klimatisiert ist, bevor die installierten elektrischen Komponenten aktiviert werden, um für betriebsfähige Umweltbedingungen zu sorgen.

Die Stromversorgung über die Energiequelle 23 kann vorzugsweise durch eine vibrationsarme Brennstoffzelle, eine Verteilereinheit und einen Akkumulator gewährleistet werden. Die Komponenten sind durch ein Dämpfungssystem mit dem Container 16 verbunden, um die Übertragung von Vibrationen auf den Container 16 und damit auf die multispektrale Sensorik zu vermeiden. Die Brennstoffzelle kann mit Methanol betrieben werden, ist akustisch ab einer Entfernung von etwa sieben Metern nicht mehr wahrnehmbar, erzeugt kaum detektierbare Emissionen und ist wartungsarm. Die Energiequelle 23 ermöglicht einen autonomen Betrieb für mindestens 32 Stunden ohne Eingriff durch einen Operator und kann von außen mit Spannungen alternativ zur eigenen Spannungsversorgung versorgt werden. Der Wechsel von der eigenen Brennstoffzellspannung zu einer externen Spannungsversorgung und umgekehrt ist dabei unterbrechungsfrei möglich. Es erfolgt hierbei ein automatischer Wechsel im Falle des Spannungsverlustes der aktuellen Quelle oder ein manueller Wechsel mit Hilfe des Energieversorgungseinrichtungsbedienpanels 21.

Die Kommunikationsbasisstation 90 kann optional auch ein Sensorsystem 60 aufweisen, welches außen am Container 16 angebracht werden kann. Eine Sensorhubvorrichtung 66 ist Teil des Sensorsystems 60 und trägt eine multispektrale Sensoreinrichtung 63, welche einen oder mehrere Infrarotsensoren, einen VIS-Sensor und einen Laserentfernungsmesser aufweist und welche eine Dämpfungsvorrichtung besitzt, die die Übertragung von Vibrationen auf die Sensorik konstruktiv abfängt. Die Sensorhubvorrichtung 66 steht mit dem Kommunikationssubsystem 50 über eine kabelgebundene Datenbusverbindung E in kommunikativer Verbindung. Wie in Fig. 7 gezeigt, kann das Sensorsystem 60 komplett an den Container 16 der Kommunikationsbasisstation 90 integriert werden.

In anderen Varianten (nicht explizit dargestellt) können zusätzlich oder alternativ Sensorsysteme 60 als abgesetzte Dreibeinvorrichtungen außerhalb des Containers 16 eingesetzt werden. In diesem Fall kann eine Kabelverbindung von bis zu 100 Metern zwischen der Schnittstelleneinrichtung 70 im Container 16 und dem Sensorsystem 60 eingerichtet werden, um die Sensorik schwankungs- und vibrationsarm betreiben zu können, beispielsweise bei starkem Wind oder Böen oder bei einem Erreichen einer günstigeren Tarnung des Sensorsystems 60 im Gelände. Im Falle eines extern aufgestellten Sensorsystems 60 wird statt der Sensorhubvorrichtung 66 ein Dreibein 68 eingesetzt, welches die Sensoreinrichtung 63 trägt.

Die Sensorhubvorrichtung 66 ist ein Spindelmastsystem und ist an der Rückseite des Containers 16 an der Außenwand neben der Tür montiert. Ein Bedienpanel 67 hierzu befindet sich im Innenraum des Containers 16. Mittels einer eingebauten Kurbel kann ein manueller Notbetrieb eingerichtet werden. Die Höhe beträgt im eingefahrenen Zustand etwa 1,7 Meter, im ausgefahrenen Zustand maximal 8 Meter. Die maximale Kopflast der Sensorhubvorrichtung 66 kann etwa 250 kg betragen. Ein Energie- und Datenverteilermodul 61, ein daran angeschlossenes Sensorsteuergerät 62, die Sensoreinrichtung 63 und eine Navigationsantenne 64 werden in einem Rahmengestell der Sensorhubvorrichtung 66 als Kopflast aufgenommen. Dadurch wird eine flexible Aufrichtung aller Sensorkomponenten über das Containerdach hinaus ermöglicht, wodurch sich Deckungs- und Tarnungsmöglichkeiten für den Container ergeben.

Das Sensorsystem 60 umfasst eine multispektrale Zieldetektions- und - verfolgungssensorik, die als offene Plattform ausgelegt ist, und eine VIS-Kamera, die als Farb- oder Schwarzweisskamera ausgeprägt sein kann, mindestens eine Infrarotkamera und einen augensicheren Laserentfernungsmesser. Die Zieldetektions- und -verfolgungssensorik ermöglicht die Fernsteuerung der Sensorik vom Gefechtsstand aus sowie eine Installation auf einem Dreibein.

Eine stabilisierte Schwenk- und Neigeeinheit 65 ("Pan-and-Tilt"), welche für die mechanische 2-Achsenstabilisierung in der Sensoreinrichtung 63 vorgesehen ist, weist beispielsweise eine Sichtlinienbeweglichkeit von Azimut n x 360° und Elevation von -120° bis 90° auf. Die Schwenk- und Neigeeinheit 65 ist eine offene Plattform zur Aufnahme von Nutzlasten und ist leicht zu montieren bzw. zu demontieren. Die Schwenk- und Neigeeinheit 65 kann aus zwei Komponenten bestehen: ein 2-Achsengimbalblock mit elektromechanischen Azimut-/Elevationsantrieben, Sensorik und Bremsen sowie ein Elektronikbaustein mit Stromversorgung, Achsensteuerung und Kommunikationsschnittstellen.

Die Infrarotkameras können jeweils in verschiedenen Infrarotbereichen von etwa 0,78 bis 1,4 (NIR) oder 1,4 bis 3 µm (SWIR) oder 3 bis 8 µm (MWIR) oder 8 bis 15 µm (LWIR) arbeiten und sind speziell für große Reichweiten im Tag-/Nachtbetrieb auch unter ungünstigen Witterungsbedingungen einsetzbar. Eine Infrarotkamera kann entsprechend gehärtet sein ("ruggedized"). Die VIS-Kamera kann speziell für große Reichweiten bei Tageslicht und/oder Dämmerung konzipiert werden bei einer spektralen Empfindlichkeit von 400 bis 760 nm. Die VIS-Kamera kann einen CCD-Bildverarbeitungschip einsetzen und eine fokale Länge von 50 bis 1550 mm aufweisen. Der Laserentfernungsmesser ist an die Sichtlinie der VIS-Kamera angepasst und kann bei einer Wellenlänge von beispielsweise 1,535 µm betrieben werden, wie etwa ein Erbiumfaserlaser.

Das Sensorsteuergerät 62 dient der übergeordneten Steuerung der zumindest einen Infrarotkamera, der VIS-Kamera und des Laserentfernungsmessers und kann eine Video- bzw. Infrarottrackingfunktion aufweisen. Dabei können eine elektronische Bildstabilisierung, eine bedienergesteuerte Bildfusion der Infrarot- und VIS-Sensorik sowie gegebenenfalls weitere Bildmanipulationen in dem Sensorsteuergerät 62 durchgeführt werden. Das Energie- und Datenverteilermodul 61 kann eine Datenschnittstelle (beispielsweise Ethernet) zur Schnittstelleneinrichtung 70 bereitstellen, um mit selbiger über eine kabelgebundene Datennetzverbindung E in kommunikativer Verbindung stehen zu können. Das Energie- und Datenverteilermodul 61 sorgt zudem für die Energieverteilung der Energieversorgungseinrichtung 20 an die Sensoren in dem Sensorsystem 60.

Fig. 8 zeigt ein schematisches Blockschaubild eines Peripherieadapters 80 zur Anbindung eines Peripherieelements 500 an eine Netzwerkumgebung eines taktischen Luftverteidigungssystems. Der Peripherieadapter 80 kann beispielsweise in der in Fig. 1 und 2 beispielhaft dargestellten Netzwerkumgebung 100 des taktischen Luftverteidigungssystems 200 eingesetzt werden. Die Anzahl der eingesetzten Peripherieadapter 80 kann variabel an das zu integrierende Peripherieelement 500 angepasst werden.

Die Hauptfunktionen eines Peripherieadapters 80 der Fig. 8 umfassen eine Daten- und Protokollkonversion zwischen einem Peripherieelement 500 und dem zentralen Kommunikationsprotokolls der Kernstruktur K. Dazu kann der Peripherieadapter 80 ein Terminal zum Datenaustausch, wie etwa von Videodaten oder Sprachdaten, mit dem Gefechtsstand 300 oder Peripherie-Elementen 500 umfassen. Das Terminal kann mit einem lokalen Laptop als Eingabe-/Ausgabeeinrichtung verwendet werden.

Der Peripherieadapter 80 umfasst funktionell gesehen zwei Hälften - die Peripherieschnittstelle 47 und die Kernschnittstelle 53. Die Kernschnittstelle 53 kann funktionell betrachtet zur Kernstruktur K des Kommunikationssystems des LVS gezählt werden. Damit kann der Betreiber des Kommunikationssystems Konfigurationen der Kernschnittstelle 53 in eigenem Ermessen durchführen.

Die Peripherieschnittstelle 47 hingegen kann zur Peripherie zugehörig angesehen werden. Beide Funktionshälften kommunizieren miteinander über einen instanziierten P&F-Datenspeicher 54 (P&F = "Plug & Fight"). Die Hersteller der Peripherieelemente 500, an denen die Peripherieadapter 80 angeschlossen sind, wie etwa Radargeräte oder Effektoren, sind für die Konfiguration der Peripherieschnittstelle 47 verantwortlich. Dazu kann der Peripherieadapter 80 eine möglichst offene Entwicklungsumgebung, vor allem für Software, aufweisen, die es einem Hersteller ermöglicht, die Funktionen der Peripherieschnittstelle 47 (Peripherieelementtreiber 44, Peripherieelementdatenspeicher 46 und Datenprotokollkonverter 45) entsprechend den Anforderungen der gewählten Instanziierung des angeschlossenen Peripherieelements 500 zu programmieren. Diese Entwicklungsumgebung kann derart ausgeprägt sein, dass jeder Hersteller eines anzubindenden Peripherieelements 500 die Funktionen der Peripherieschnittstelle 47 fertig entwickeln, d.h. Algorithmen und Abläufe integrieren kann, so dass der instanziierte P&F-Datenspeicher 54 der Kernschnittstelle 53 korrekt beschrieben bzw. ausgelesen werden kann. In der Kernschnittstelle 53 kann die Entwicklungsumgebung insbesondere für die Instanziierung des P&F-Datenspeichers 54, eines P&F-Treibers 55 und eines P&F-Interaktionsregelwerkes 44 benutzt werden.

Die vom Hersteller des angeschlossenen Peripherieelements 500 programmierten Funktionen stellen daher eine Verbindung zwischen den üblicherweise in einem proprietären Format vorliegenden Rohdaten des angeschlossenen Peripherieelements 500 und den vorgegebenen, standardisierten und instanziierten Format der Kernschnittstelle 53 (Daten, Treiber, Regeln) dar.

Der Peripherieelementtreiber 44 hat die Aufgabe, die Daten, die für den in der Kernschnittstelle 53 instanziierten P&F-Treiber 55 (z.B. Status, Report, Fehlermeldungen, Sensor-Tracks, Munitionsvorrat etc.) erforderlich sind, von dem Peripherieelement 500 zu beschaffen und in den Peripherieelementdatenspeicher 46 zu schreiben. Weiterhin ist der Peripherieelementtreiber 44 dazu eingerichtet, Daten, die von der Kernschnittstelle 53 über den Peripherieelementdatenspeicher 46 empfangen und vom Datenprotokollkonverter 45 in die Applikationsdomäne des Peripherieelements 500 übersetzt wurden, in das Peripherieelement 500 einzuspeisen.

Der Peripherieelementdatenspeicher 46 speichert Daten, die der instanziierte P&F-Treiber 55 der Kernschnittstelle 53 anfordert. Diese Daten liegen in der Form und mit dem Informationsgehalt vor, wie sie der Peripherieelementtreiber 44 von dem Peripherieelement 500 erhalten hat. Sie können im Bezug auf den für den instanziierten P&F-Treiber 55 erforderlichen Informationsgehalt unvollständig sein. Der Peripherieelementdatenspeicher 46 speichert zudem Informationen, die durch den Datenprotokollkonverter 45 in das von dem Peripherieelement 500 geforderte Format gewandelt und gegebenenfalls vervollständigt oder uminterpretiert worden sind. Dateninhalte des Peripherieelementdatenspeichers 46 können mit Informationen zu Zeitstempel, Quelle und/oder Kontext auf einem entnehmbaren, persistenten Speichermedium gespeichert und gesichert werden (Data Logging).

Der Datenprotokollkonverter 45 hat die Aufgabe, Daten aus dem Peripherieelementdatenspeicher 46 auszulesen bzw. dort hinein zu schreiben und gegebenenfalls so zu vervollständigen, dass Format und Inhalt den Erfordernissen des instanziierten P&F-Treibers 55 entsprechen. Dies erfolgt gemäß den Regeln des instanziierten P&F-Interaktionsregelwerkes 44, aus dem der Datenprotokollkonverter 45 ebenfalls Daten lesen und in die Applikationsdomäne des Peripherieelements 500 umsetzen kann. Insofern stellt der Datenprotokollkonverter 45 eine Übersetzungsschicht zwischen den Anwendungsdomänen von Peripherieelementen 500 und der Kernstruktur K des LVS dar. Der Datenprotokollkonverter 45 kann unter Umständen auch die Umsetzung zwischen IPv4 und IPv6 übernehmen.

Die Kernschnittstelle 53 hat die Aufgabe, Botschaften der Edge-Gateways 10 zu zerlegen und die daraus generierten Dateninhalte in den instanziierten P&F-Datenspeicher 54 zu schreiben. Weiterhin liest die Kernschnittstelle 53 Daten aus dem instanziierten P&F-Datenspeicher 54 aus und stellt die Daten zu entsprechenden P&F-Botschaften zusammen, priorisiert selbige und fasst sie gegebenenfalls zu Paketen mit gleicher Priorität zusammen.

Mittels der zum Peripherieadapter 80 zugehörigen Entwicklungsumgebung wird in Abhängigkeit vom Typ des angeschlossenen Peripherieelements 500 eine Instanziierung von P&F-Datenspeicher 54, P&F-Treiber 55, eines P&F-Zustandsautomaten und des P&F-Interaktionsregelwerkes 44 erfolgen. Diese Instanziierungen bilden gemeinsam ein P&F-Schnittstellenmuster, welche in der Entwicklungsumgebung für verschiedene Systemkomponententypen vorkonfiguriert werden können: Radarsensor, Elektro-Optischer Sensor (EOS), Sonstiger Sensor, Flugkörper-Effektor, Kanonen-Effektor, Laser-Effektor, Multi-Effektor, Nachlade-Element, Erkundungs-Element, Logistik-Element, sonstiges Unterstützungs-Element, Einsatzgefechtsstand, Führungsgefechtsstand, übergeordneter Gefechtsstand. Damit stehen generische P&F-Schnittstellenmuster zur Verfügung, mit denen der Gefechtsstand 300 nach entsprechender Instanziierung mit den Peripherieelementen 500 kommunizieren kann. Die P&F-Schnittstellenmuster unterscheiden sich durch die Art und den Umfang der Daten, die zwischen der jeweiligen Instanz und dem Gefechtsstand der Kernstruktur K ausgetauscht werden und die durch den Informations- und Kommunikationsbedarf des Einsatzgefechtsstandes definiert sind. Ein weiteres Unterscheidungsmerkmal ist der Interaktionsmechanismus (Zustandsautomat, Interaktionsregeln), der zwischen der jeweiligen Instanz und dem Gefechtsstand vorgegeben ist.

Ein in der Kernschnittstelle instanziierter P&F-Zustandsautomat kann gemäß dem Peripherieelementtyp instanziiert werden und ermöglicht dem Gefechtsstand 300 die effiziente Steuerung des Peripherieelements 500. Dazu kann der Gefechtsstand 300 typischerweise folgende Zustände des Peripherieelements 500 kontrollieren: Inaktiv, Lokale Bereitschaft, Lokaler Test, Safety-Delay, Remote Bereitschaft, Remote Test, Bekämpfen, Automatische Notdeaktivierung, Training. Für einige Zustände wie etwa Bereitschaft und Bekämpfen können Subzustände definiert werden. Für jeden Zustand ist zudem definiert, welche P&F-Botschaften zwischen dem Gefechtsstand 300 und dem Peripherieelement 500 ausgetauscht werden können.

Das instanziiertes P&F- Interaktionsregelwerk 44 kann gemäß dem Systemkomponententyp instanziiert werden und liefert dann dem Peripherieelementtreiber 44, dem Datenprotokollkonverter 45 und dem P&F-Treiber 55 prozedurale Vorgaben, zu welchem Zeitpunkt welche Daten anzufordern, zu lesen und zu schreiben sind, welche Kommunikationsmuster bzw. Zugriffsmuster verwendet werden sollen, welche Daten zu vervollständigen sind, und welche Daten in welcher Form bzw. in welche Struktur zu konvertieren sind.

Der Peripherieadapter 80 kann zudem über ein lokales Display 81 verfügen, über welches die jeweiligen Einstellungen der Komponenten des Peripherieadapters 80 lokal vorgenommen werden können.

Fig. 9 zeigt ein Verfahren M zur Kommunikation zwischen Systemkomponenten eines taktischen Luftverteidigungssystems. Das Verfahren M kann beispielsweise in einem taktischen Luftverteidigungssystem 200 der Fig. 1 und 2 eingesetzt werden, welches Edge-Gateways 10 gemäß Fig. 6, Kommunikationsbasisstationen 90 gemäß Fig. 7 sowie ein oder mehrere Peripherieadapter 80 gemäß Fig. 8 aufweist.

Das Verfahren M weist als ersten Schritt M1 zunächst ein Ankoppeln einer Kommunikationsbasisstation 90 über eine kabelgebundene Datennetzverbindung E an einen Gefechtsstand 300 des taktischen Luftverteidigungssystems 200 auf. Dann wird in einem zweiten Schritt M2 eine bidirektionale kommunikative Funkverbindung zwischen ein oder mehreren Edge-Gateways 10 und der Kommunikationsbasisstation 90 aufgebaut. Diese Funkverbindung ermöglicht einen funkgebundenen Datenaustausch gemäß einem gemeinsamen Kommunikationsprotokoll, beispielsweise durch ein Implementieren einer zentralistischen, deterministischen oder einer dezentralen, stochastischen Kanalzugriffsmethode.

In einem dritten Schritt M3 des Verfahrens M werden ein oder mehrere Peripherieadapter 80 über kabelgebundene Datennetzverbindungen E an jeweils eines der ein oder mehreren Edge-Gateways 10 angekoppelt, so dass in einem vierten Schritt M4 eine bidirektionale Datenkommunikation zwischen mit den ein oder mehreren Peripherieadaptern 80 verbundenen Systemkomponenten 500 des taktischen Luftverteidigungssystems 200 mit dem Gefechtsstand 300 über die ein oder mehreren Edge-Gateways 10 und die Kommunikationsbasisstation 90 vermittelt werden kann.

Die Peripherieadapter 80 können dabei in jeweils eine der Systemkomponenten 500 fest integriert werden. Alternativ dazu kann es auch möglich sein, die ein oder mehreren Peripherieadapter 80 als mobile Geräte auszugestalten, die in kommunikativer Datenverbindung mit jeweils einer Systemkomponente 500 stehen und bedarfsgerecht mit einer jeweils zugeordneten Systemkomponente 500 dynamisch assoziiert werden können.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Kommunikationssystem für ein taktisches Luftverteidigungssystem (200), umfassend:
eine Kommunikationsbasisstation (90), welche über eine kabelgebundene Datennetzverbindung (E) an einen Gefechtsstand (300) des taktischen Luftverteidigungssystems (200) ankoppelbar ist;
ein oder mehrere Edge-Gateways (10), welche mit der Kommunikationsbasisstation (90) in bidirektionaler kommunikativer Funkverbindung stehen und welche dazu ausgelegt sind, mit der Kommunikationsbasisstation (90) gemäß einem gemeinsamen Kommunikationsprotokoll Daten auszutauschen; und
ein oder mehrere Peripherieadapter (80), welche über kabelgebundene Datennetzverbindungen (E) an jeweils eines der ein oder mehreren Edge-Gateways (10) ankoppelbar sind und welche zur datentechnischen Anbindung eines Peripherieelements (500) an das taktische Luftverteidigungssystem (200) ausgebildet sind;
wobei die ein oder mehreren Peripherieadapter (80) jeweils eine Kernschnittstelle (53) und eine Peripherieschnittstelle (47) aufweisen, welche dazu ausgelegt sind, Daten, welche zwischen einem Edge-Gateway (10) und
einem Peripherieelement (500) ausgetauscht werden, bezüglich eines Datenformates und eines Kommunikationsprotokolles zu konvertieren;
wobei die Kommunikationsbasisstation (90) eine zentralistische, deterministische Kanalzugriffsmethode zum Aufbau der bidirektionalen kommunikativen Funkverbindung mit den ein oder mehreren Edge-Gateways (10) implementiert; und
wobei die Kommunikationsbasisstation (90) weiterhin dazu ausgelegt ist, eine Transportpriorisierung zwischen den ein oder mehreren Edge-Gateways (10) und der Kommunikationsbasisstation (90) vorzunehmen.

2. Kommunikationssystem gemäß Anspruch 1, wobei die ein oder mehreren Peripherieadapter (80) in jeweils ein Peripherieelement (500) fest integriert sind.

3. Kommunikationssystem gemäß Anspruch 1, wobei die ein oder mehreren Peripherieadapter (80) mobile Geräte sind, die in kommunikativer Datenverbindung mit jeweils einem Peripherieelement (500) stehen.

4. Kommunikationssystem gemäß einem der Ansprüche 1 bis 3, wobei die kabelgebundenen Datennetzverbindungen (E) zwischen den ein oder mehreren Peripherieadaptern (80) und den ein oder mehrere Edge-Gateways (10) abhörsicher durch Kabelabschirmungen oder Verwendung von Glasfaserkabeln sind.

5. Kommunikationssystem gemäß einem der Ansprüche 1 bis 4, wobei die Kommunikationsbasisstation (90) weiterhin dazu ausgebildet ist, ein Gefechtsstandsfunknetz zwischen mehreren Gefechtsständen (300) des taktischen Luftverteidigungssystems (200) aufrechtzuerhalten.

6. Kommunikationssystem gemäß einem der Ansprüche 1 bis 5, wobei die Kernschnittstelle (53) einen instantiierten Kernschnittstellentreiber (55) aufweist, welcher durch ein instantiiertes Interaktionsregelwerk (44) des Peripherieadapters (80) gesteuert wird.

7. Kommunikationssystem gemäß einem der Ansprüche 1 bis 5, wobei die Peripherieschnittstelle einen Peripherieelementtreiber (44) und einen mit dem Peripherieelementtreiber (44) gekoppelten Datenkonverter (45) aufweist.

8. Taktisches Luftverteidigungssystem (200) mit:
mindestens einem Gefechtsstand (300);
einem Kommunikationssystem gemäß einem der Ansprüche 1 bis 7, dessen Kommunikationsbasisstation (90) mit dem mindestens einen Gefechtsstand (300) in kabelgebundener Kommunikationsverbindung steht; und
ein oder mehreren Luftverteidigungssystemkomponenten (500), welche mit jeweils einem der ein oder mehreren Peripherieadapter (80) in kommunikativer Wirkverbindung stehen und welche dazu ausgelegt sind,
über die ein oder mehreren Peripherieadapter (80), die ein oder mehreren Edge-Gateways (10) und die Kommunikationsbasisstation (90) Daten mit dem mindestens einen Gefechtsstand (300) auszutauschen.

9. Taktisches Luftverteidigungssystem (200) gemäß Anspruch 8, wobei die Kommunikationsbasisstation (90) des Kommunikationssystems weiterhin dazu ausgelegt ist, den mindestens einen Gefechtsstand (300) über ein abhörsicheres Gefechtsstandfunknetz mit mindestens einem weiteren Gefechtsstand zu verbinden.

10. Verfahren (M) zur Kommunikation zwischen Systemkomponenten eines taktischen Luftverteidigungssystems (200), mit den Schritten:
Ankoppeln (M1) einer Kommunikationsbasisstation (90) über eine kabelgebundene Datennetzverbindung (E) an einen Gefechtsstand (300) des taktischen Luftverteidigungssystems (200);
Herstellen (M2) einer bidirektionalen kommunikativen Funkverbindung zwischen ein oder mehreren Edge-Gateways (10) und der Kommunikationsbasisstation (90), welche einen funkgebundenen Datenaustausch gemäß einem gemeinsamen Kommunikationsprotokoll ermöglicht;
Ankoppeln (M3) eines oder mehrerer Peripherieadapter (80) über kabelgebundene Datennetzverbindungen (E) an jeweils eines der ein oder mehreren Edge-Gateways (10); und
Vermitteln (M4) einer bidirektionalen Datenkommunikation zwischen mit den ein oder mehreren Peripherieadaptern (80) verbundenen Peripherieelementen (500) des taktischen Luftverteidigungssystems (200) mit dem Gefechtsstand (300) über die ein oder mehreren Edge-Gateways (10) und die Kommunikationsbasisstation (90);
wobei die ein oder mehreren Peripherieadapter (80) jeweils eine Kernschnittstelle (53) und eine Peripherieschnittstelle (47) aufweisen, welche Daten, welche zwischen einem Edge-Gateway (10) und einem Peripherieelement (500) ausgetauscht werden, bezüglich eines Datenformates und eines Kommunikationsprotokolles konvertiert;
wobei der Schritt des Herstellens (M2) der bidirektionalen kommunikativen Funkverbindung ein Implementieren einer zentralistischen, deterministischen Kanalzugriffsmethode zum Aufbau der bidirektionalen kommunikativen Funkverbindung zwischen der Kommunikationsbasisstation (90) und den ein oder mehreren Edge-Gateways (10) umfasst; und
wobei die Kommunikationsbasisstation (90) eine Transportpriorisierung zwischen den ein oder mehreren Edge-Gateways (10) und der Kommunikationsbasisstation (90) vornimmt.

11. Verfahren (M) gemäß Anspruch 10, wobei die ein oder mehreren Peripherieadapter (80) in jeweils ein Peripherieelement (500) fest integriert sind.

12. Verfahren (M) gemäß Anspruch 10, wobei die die ein oder mehreren Peripherieadapter (80) mobile Geräte sind, die in kommunikativer Datenverbindung mit jeweils einem Peripherieelement (500) stehen.

## Claims

1. Communication system for a tactical air defence system (200), comprising:
a communication base station (90), which can be coupled to a command post (300) of the tactical air defence system (200) via a wired data network connection (E);
one or more edge gateways (10), which are in a bidirectional communicative radio connection with the communication base station (90) and which are configured to exchange data with the communication base station (90) in accordance with a joint communication protocol; and
one or more peripheral adapters (80), which can be coupled each to one of the one or more edge gateways (10) via wired data network connections (E), and which are configured for data-linking a peripheral element (500) to the tactical air defence system (200);
wherein the one or more peripheral adapters (80) each have a core interface (53) and a peripheral interface (47), which are configured to convert data, which are exchanged between an edge gateway (10) and a peripheral element (500), in terms of data format and communication protocol;
wherein the communication base station (90) implements a centralised, deterministic channel access method for forming the bidirectional communicative radio connection to the one or more edge gateways (10); and
wherein the communication base station (90) is further configured to perform transport prioritisation between the one or more edge gateways (10) and the communication base station (90).

2. Communication system according to claim 1, wherein the one or more peripheral adapters (80) are each permanently integrated into a peripheral element (500).

3. Communication system according to claim 1 wherein the one or more peripheral adapters (80) are mobile devices which are each in a communicative data connection with a peripheral element (500).

4. Communication system according to any of claims 1 to 3, wherein the wired data network connections (E) between the one or more peripheral adapters (80) and the one or more edge gateways (10) are tap-proofed by cable shielding or by using glass-fibre cables.

5. Communication system according to any of claims 1 to 4, wherein the communication base station (90) is further configured to maintain a command post radio network between a plurality of command posts (300) of the tactical air defence system (200).

6. Communication system according to any of claims 1 to 5, wherein the core interface (53) has an instanced core interface driver (55) which is controlled by an instanced interaction policy (44) of the peripheral adapter (80).

7. Communication system according to any of claims 1 to 5, wherein the peripheral interface has a peripheral element driver (44) and a data converter (45) which is coupled to the peripheral element driver (44).

8. Tactical air defence system (200), comprising:
at least one command post (300);
a communication system according to any of claims 1 to 7, the communication base station (90) of which is in a wired communication connection with the at least one command post (300); and
one or more air defence system components (500), which are each in a communicative operative connection with one of the one or more peripheral adapters (80) and which are configured to exchange data with the at least one command post (300) via the one or more peripheral adapters (80), the one or more edge gateways (10) and the communication base station (90).

9. Tactical air defence system (200) according to claim 8, wherein the communication base station (90) of the communication system is further configured to connect the at least one command post (300) to at least one further command post via a tap-proofed command post radio network.

10. Method (M) for communication between system components of a tactical air defence system (200), comprising the steps of:
coupling (M1) a communication base station (90) to a command post (300) of the tactical air defence system (200) via a wired data network connection (E);
establishing (M2) a bidirectional communicative radio connection between one or more edge gateways (10) and the communication base station (90), which enables radio-linked data exchange in accordance with a joint communication protocol;
coupling (M3) one or more peripheral adapters (80) each to one of the one or more edge gateways (10) via wired data network connections (E); and
providing (M4) bidirectional data communication between peripheral elements (500) of the tactical air defence system (200), which are connected to the one or more peripheral adapters (80), and the command post (300), via the one or more edge gateways (10) and the communication base station (90);
wherein the one or more peripheral adapters (80) each have a core interface (53) and a peripheral interface (47), which converts data, which are exchanged between an edge gateway (10) and a peripheral element (500), in terms of data format and communication protocol;
wherein the step of establishing (M2) the bidirectional communicative radio connection comprises implementing a centralised, deterministic channel access method for forming the bidirectional communicative radio connection between the communication base station (90) and the one or more edge gateways (10); and
wherein the communication base station (90) performs transport prioritisation between the one or more edge gateways (10) and the communication base station (90).

11. Method (M) according to claim 10, wherein the one or more peripheral adapters (80) are each permanently integrated into a peripheral element (500).

12. Method (M) according to claim 10, wherein the one or more peripheral adapters (80) are mobile devices which are each in a communicative data connection with a peripheral element (500).

## Revendications

1. Système de communication pour un système de défense aérienne tactique (200), comprenant :
une station de base de communication (90) pouvant être accouplée à un poste de commandement (300) du système de défense aérienne tactique (200) via une liaison de réseau de données câblées (E) ;
une ou plusieurs passerelles de périphérie (*edge gateways*) (10) qui sont en liaison radio de communication bidirectionnelle avec la station de base de communication (90) et qui sont conçues pour échanger des données avec la station de base de communication (90) selon un protocole de communication commun ; et
un ou plusieurs adaptateurs périphériques (80) qui peuvent être accouplés à l'une respective desdites une ou plusieurs passerelles de périphérie (10) via des liaisons de réseau de données câblées (E) et qui sont conçus pour la liaison informatique d'un élément périphérique (500) au système de défense aérienne tactique (200) ;
dans lequel lesdits un ou plusieurs adaptateurs périphériques (80) présentent chacun une interface centrale (53) et une interface périphérique (47) qui sont conçues pour convertir des données échangées entre une passerelle de périphérie (10) et un élément périphérique (500) en ce qui concerne un format de données et un protocole de communications ;
dans lequel la station de base de communication (90) met en œuvre une méthode d'accès aux canaux déterministe centralisée pour établir la liaison radio de communication bidirectionnelle avec lesdites une ou plusieurs passerelles de périphérie (10) ; et
dans lequel la station de base de communication (90) est en outre conçue pour effectuer une priorisation de transport entre lesdites une ou plusieurs passerelles de périphérie (10) et la station de base de communication (90).

2. Système de communication selon la revendication 1, dans lequel lesdits un ou plusieurs adaptateurs périphériques (80) sont chacun intégrés de manière fixe dans un élément périphérique (500) .

3. Système de communication selon la revendication 1, dans lequel lesdits un ou plusieurs adaptateurs périphériques (80) sont des appareils mobiles qui sont en liaison de données de communication avec un élément périphérique respectif (500).

4. Système de communication selon l'une des revendications 1 à 3, dans lequel les liaisons de réseau de données câblées (E) entre lesdits un ou plusieurs adaptateurs périphériques (80) et lesdites une ou plusieurs passerelles de périphérie (10) sont protégées contre les écoutes par un blindage de câble ou l'utilisation de câbles à fibres optiques.

5. Système de communication selon l'une des revendications 1 à 4, dans lequel la station de base de communication (90) est en outre conçue pour maintenir un réseau radio de poste de commandement entre plusieurs postes de commandement (300) du système de défense aérienne tactique (200).

6. Système de communication selon l'une des revendications 1 à 5, dans lequel l'interface centrale (53) présente un pilote d'interface centrale instancié (55) qui est commandé par un corps de règles d'interaction instancié (44) de l'adaptateur périphérique (80).

7. Système de communication selon l'une des revendications 1 à 5, dans lequel l'interface périphérique présente un pilote d'élément périphérique (44) et un convertisseur de données (45) couplé au pilote d'élément périphérique (44).

8. Système de défense aérienne tactique (200), comprenant :
au moins un poste de commandement (300) ;
un système de communication selon l'une des revendications 1 à 7, dont la station de base de communication (90) est en liaison de communication câblée avec ledit au moins un poste de commandement (300) ; et
un ou plusieurs composants de système de défense aérienne (500) qui sont chacun en liaison fonctionnelle de communication avec l'un desdits un ou plusieurs adaptateurs périphériques (80) et qui sont conçus pour échanger des données avec ledit au moins un poste de commandement (300) via lesdits un ou plusieurs adaptateurs périphériques (80), lesdites une ou plusieurs passerelles de périphérie (10) et la station de base de communication (90).

9. Système de défense aérienne tactique (200) selon la revendication 8, dans lequel la station de base de communication (90) du système de communication est en outre conçue pour relier ledit au moins un poste de commandement (300) à au moins un autre poste de commandement via un réseau radio de poste de commandement protégé contre les écoutes.

10. Procédé (M) de communication entre des composants de système d'un système de défense aérienne tactique (200), comprenant les étapes consistant à :
accoupler (M1) une station de base de communication (90) à un poste de commandement (300) du système de défense aérienne tactique (200) via une liaison de réseau de données câblée (E) ;
établir (M2) une liaison radio de communication bidirectionnelle entre une ou plusieurs passerelles de périphérie (10) et la station de base de communication (90), qui permet un échange de données par radio selon un protocole de communication commun ;
accoupler (M3) un ou plusieurs adaptateurs périphériques (80) à l'une respective desdites une ou plusieurs passerelles de périphérie (10) via des liaisons de réseau de données câblées (E) ; et
réaliser (M4) une communication de données bidirectionnelle entre des éléments périphériques (500) du système de défense aérienne tactique (200) reliés auxdits un ou plusieurs adaptateurs périphériques (80) avec le poste de commandement (300) via lesdites une ou plusieurs passerelles de périphérie (10) et la station de base de communication (90) ;
dans lequel lesdits un ou plusieurs adaptateurs périphériques (80) présentent chacun une interface centrale (53) et une interface périphérique (47) qui convertit des données échangées entre une passerelle de périphérie (10) et un élément périphérique (500) en ce qui concerne un format de données et un protocole de communication ;
dans lequel l'étape consistant à établir (M2) la liaison radio de communication bidirectionnelle comprend la mise en œuvre d'une méthode d'accès aux canaux déterministe centralisée pour établir la liaison radio de communication bidirectionnelle entre la station de base de communication (90) et lesdites une ou plusieurs passerelles de périphérie (10) ; et
dans lequel la station de base de communication (90) effectue une priorisation de transport entre lesdites une ou plusieurs passerelles de périphérie (10) et la station de base de communication (90).

11. Procédé (M) selon la revendication 10, dans lequel lesdits un ou plusieurs adaptateurs périphériques (80) sont chacun intégrés de manière fixe dans un élément périphérique (500).

12. Procédé (M) selon la revendication 10, dans lequel lesdits un ou plusieurs adaptateurs périphériques (80) sont des appareils mobiles qui sont en liaison de données de communication avec un élément périphérique respectif (500).
